# EUROPEAN PATENT APPLICATION

(11) **EP 4 755 767 A2**
(43) Date of publication of application: **10.06.2026**
(21) Application number: 25220402.9
(22) Date of filing: 03.12.2025
(51) Int. Cl.: B62D 35/00

(54) **AERODYNAMIC VEHICLE AND FAIRING**

(30) Priority: 03.12.2024 US 202463727507 P
(71) Applicant: Daimler Truck North America LLC, Portland, OR 97217-7613 (US)
(72) Inventor: ZANETTI, Paolo, Portland, 97217-7613 (US); MADUGUNDI, Dinesh, Portland, 97217-7613 (US); GUZMAN, Jonathan, Portland, 97217-7613 (US)
(74) Representative: impuls legal PartG mbB

(57) **Abstract**

An aerodynamic vehicle and fairing are described. In implementations, the fairing may include a forward arcuate edge, a rearward edge, and an outward surface bounded by the forward arcuate edge and the rearward edge. The rearward edge is arranged opposite to the forward edge across a center of the outward surface and is offset relative to the forward arcuate edge in a normal direction of the outward surface. The outward surface curves from the forward arcuate edge to the rearward edge in the normal direction and forms a depression extending opposite to the normal direction. The depression is formed at least in part by the rearward edge.

## Description

### CROSS-REFERENCE

The present application claims priority to U.S. Provisional Application No. 63/727,507, filed December 3, 2024, which is hereby incorporated by reference herein in its entirety.

### FIELD

The present description relates generally to vehicles and vehicle fairings.

### BACKGROUND

Vehicles such as commercial trucks and tractors typically include various panels and other components configured to form exterior surfaces of a vehicle body. Such exterior components are often subject to environmental conditions, including various types of weather and external forces associated with driving or other movement of the vehicle. As commercial vehicles are often employed for transporting large and/or heavy loads that would otherwise be impractical or impossible to transport using smaller vehicles, such vehicles tend to prioritize cargo space and load capacity over other considerations. This can lead to these vehicles having an overall shape that results in high amounts of aerodynamic drag. Additionally, various portions of a vehicle may experience higher amounts of drag and/or air turbulence compared to other portions of the vehicle. As vehicle speeds and loads increase, excessive drag and air turbulence can lead to reduced vehicle performance, such as decreased fuel economy, decreased handling responsiveness, and increased engine torque demand for coasting speeds.

### SUMMARY

An aerodynamic vehicle and fairing are described. In implementations, the fairing may include a forward arcuate edge, a rearward edge, and an outward surface bounded by the forward arcuate edge and the rearward edge. The rearward edge is arranged opposite to the forward edge across a center of the outward surface and is offset relative to the forward arcuate edge in a normal direction of the outward surface. The outward surface curves from the forward arcuate edge to the rearward edge in the normal direction and forms a depression extending opposite to the normal direction. The depression is formed at least in part by the rearward edge.

In another implementation, a fairing assembly comprises a first fairing including a rearward arcuate edge, and a second fairing including an outward surface curving from a forward arcuate edge of the second fairing to a rearward edge of the second fairing, the rearward edge forming a first protruding portion, a second protruding portion, and a depression centered between the first protruding portion and the second protruding portion.

In a further implementation, a fairing assembly, comprises a rearward side fairing including an outward surface curving from a forward arcuate edge of the rearward side fairing to a rearward edge of the rearward side fairing, the rearward edge forming a first protruding portion, a second protruding portion, and a depression centered between the first protruding portion and the second protruding portion. Additionally, the fairing assembly comprises a central side fairing including a rearward arcuate edge shaped to face the rearward side fairing while the central side fairing and the rearward side fairing are mounted to a vehicle including a frame, the central side fairing and the rearward side fairing each offset from the frame in a lateral direction of the vehicle.

It should be understood that the summary above is provided to introduce, in simplified form, a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 illustrates an example environment depicting a side view of a vehicle including side fairings.
FIG. 2 depicts a partial perspective view of the vehicle of FIG. 1.
FIG. 3 depicts a partial perspective view of wheels and side fairings of the vehicle of FIGS. 1-2.
FIG. 4 depicts a top view of the wheels and side fairings of FIG. 3.
FIG. 5 depicts a bottom view of the wheels and side fairings of FIGS. 3-4.
FIG. 6 depicts a perspective view of a rearward side fairing.
FIG. 7 depicts an outward view of the rearward side fairing.
FIG. 8 depicts an inward view of the rearward side fairing.
FIGS. 9-10 depict end views of the rearward side fairing.
FIG. 11 depicts a top view of the rearward side fairing.
FIG. 12 depicts a bottom view of the rearward side fairing.
FIG. 13 depicts a sectional top view of the rearward side fairing.
FIG. 14 depicts a perspective view of a forward side fairing.
FIG. 15 depicts an outward view of the forward side fairing.
FIG. 16 depicts an inward view of the forward side fairing.
FIGS. 17-18 depict end views of the forward side fairing.
FIG. 19 depicts a top view of the forward side fairing.
FIG. 20 depicts a bottom view of the forward side fairing.
FIG. 21 depicts a sectional view of the forward side fairing.
FIGS. 22-29 depicts top views of the rearward side fairing and a central side fairing in example arrangements mounted to the vehicle.

### DETAILED DESCRIPTION

### Overview

The following description relates to vehicles and vehicle fairings. Vehicle fairings are additionally discussed in U.S. Patent No. 11,110,974, the entirety of which is incorporated by reference herein. As mentioned above, some vehicles, such as commercial trucks and tractors, can experience high amounts of aerodynamic drag. The drag experienced by a vehicle can increase a load on the engine or other motive source of the vehicle in order to maintain a speed of the vehicle. The increased load may further increase a fuel consumption and/or electrical power consumption of the vehicle, resulting in reduced vehicle efficiency.

Some approaches to reduce drag include configuring a front portion of the vehicle to include surfaces shaped to guide airflow away from the front of the vehicle. For example, while a vehicle is traveling, air flowing against the vehicle opposite to the direction of travel can result in a large amount of drag if the air contacts surfaces of the vehicle perpendicular to the direction of the air flow. In order to reduce the drag, the surfaces of the hood, windshield, fenders, etc. may be angled such that the air is directed away from the surfaces with a reduced amount of friction between the air and the surfaces. However, by directing the air away from the surfaces at the front of the vehicle, the air may come into contact with other components of the vehicle arranged downstream of the front portion of the vehicle. In particular, side portions of the vehicle may experience increased air turbulence and drag, which may reduce vehicle performance.

The present disclosure provides a fairing system for vehicles that at least partially addresses one or more of these aerodynamic challenges by incorporating specifically contoured fairings with defined surface features. This solution reduces aerodynamic drag by guiding airflow more efficiently around the vehicle's wheels and underbody components, thereby improving fuel economy and vehicle performance.

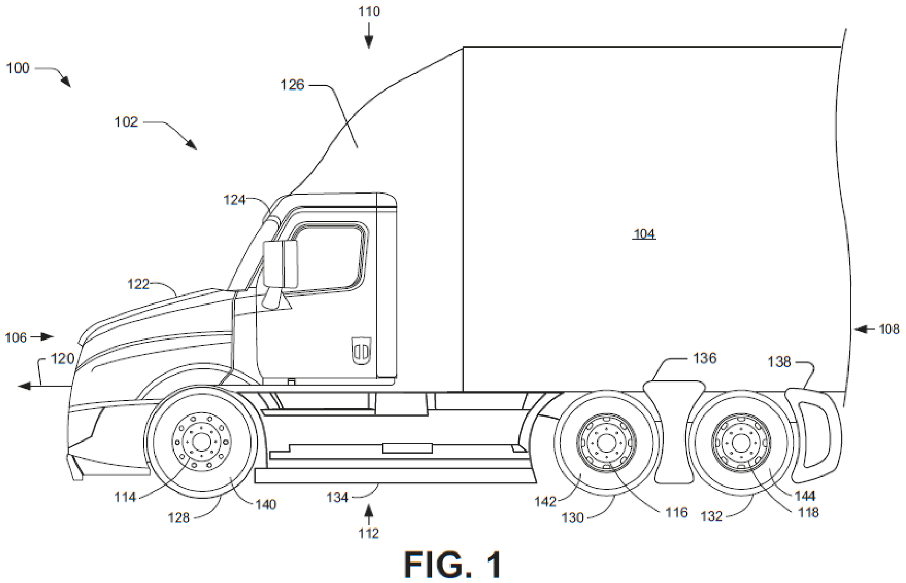

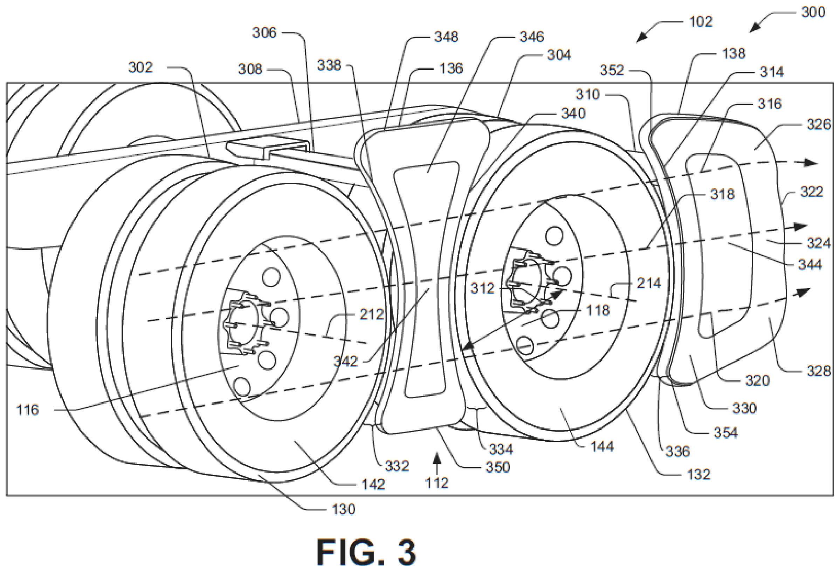

In one example, a vehicle includes a forward side fairing and/or a rearward side fairing configured to reduce an aerodynamic drag of the vehicle. The vehicle may be a commercial truck in some implementations, such as the vehicle shown by FIGS. 1-2. The forward side fairing is arranged between a front wheel of the vehicle and a second wheel subsequent to the front wheel in a rearward direction. The rearward side fairing is arranged rearward of the forward fairing, e.g., adjacent to a third wheel arranged rearward of the second wheel, as shown by FIGS. 3-5. A central fairing may be arranged between the forward side fairing and the rearward side fairing in some implementations.

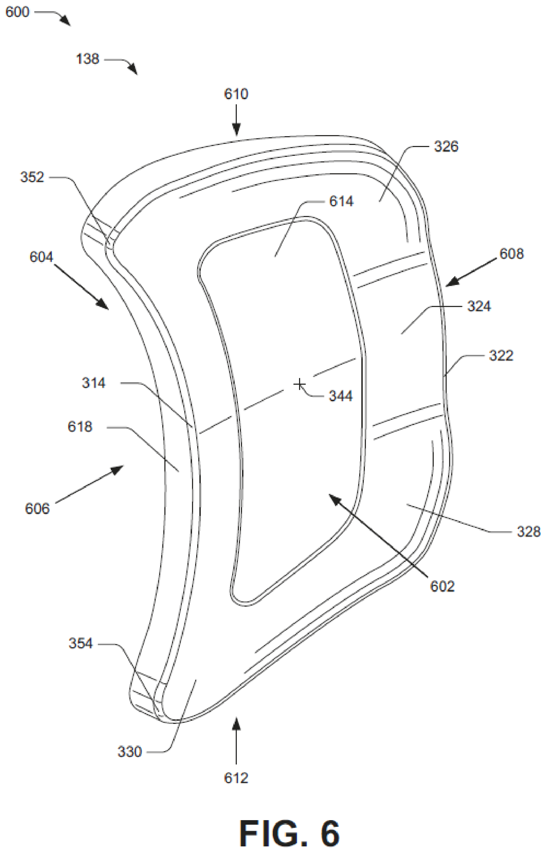

The rearward side fairing includes a forward edge, a rearward edge offset from the forward edge in an outward direction, and an outward surface forming a depression, as shown by FIGS. 6-13. The configuration of the rearward side fairing reduces deflection of air flow at the depression and increases deflection of air flow at portions of the outward surface vertically above and below the depression, resulting in decreased drag.

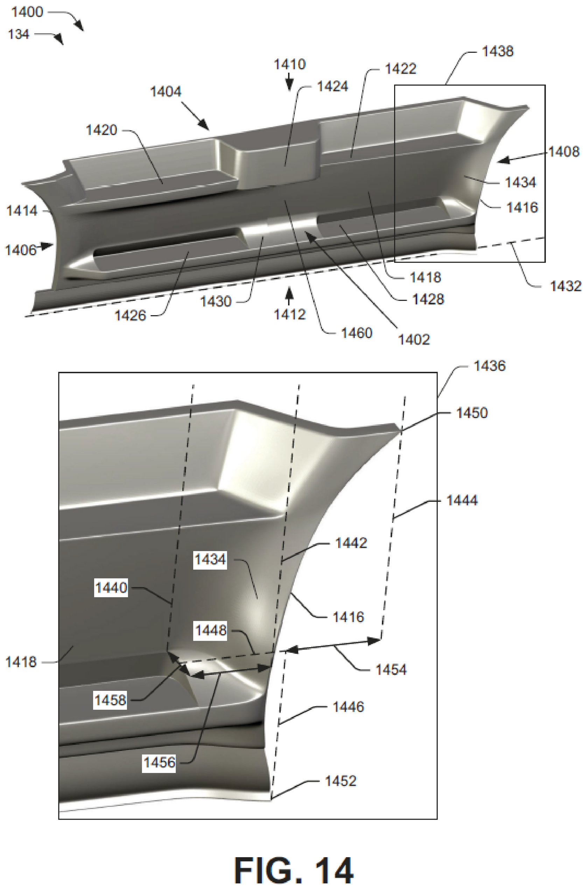

The forward side fairing includes a flared section arranged toward a rearward end, as shown by FIGS. 14-20. The flared section is shaped such that air flowing against the flared section is directed in an outward direction away from the forward side fairing, the wheels of the vehicle, and an underside of the vehicle. While each of the forward side fairing and the rearward side fairing individually reduce drag, in implementations in which the vehicle includes both of the forward side fairing and the rearward side fairing, the aerodynamic characteristics of the forward side fairing may synergize with the aerodynamic characteristics of the rearward side fairing to further reduce drag. For example, the flared section of the forward side fairing may reduce a turbulence of air flowing to the rearward side fairing. As a result, the rearward side fairing may more effectively direct air across the depression, resulting in decreased drag.

FIGS. 1-29 show example configurations with relative positioning of the various components. If shown directly contacting each other, or directly coupled, then such elements may be referred to as directly contacting or directly coupled, respectively, at least in one implementation. Similarly, elements shown contiguous or adjacent to one another may be contiguous or adjacent to each other, respectively, at least in one implementation. As an example, components laying in face-sharing contact with each other may be referred to as in face-sharing contact. As another example, elements positioned apart from each other with only a space there-between and no other components may be referred to as such, in at least one implementation. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one implementation. As used herein, top/bottom, upper/lower, above/below, may be relative to a vertical axis (e.g., z-axis) of the figures and used to describe positioning of elements of the figures relative to one another. As such, elements shown above other elements are positioned vertically above the other elements, in one or more implementations. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one implementation. Further still, an element shown within another element or shown outside of another element may be referred as such, in one implementation. FIGS. 1-29 are shown approximately to scale, although other relative dimensions may be used. In the figures, the same elements or elements having the same function are indicated by the same reference numbers.

### Aerodynamic Vehicle and Fairing

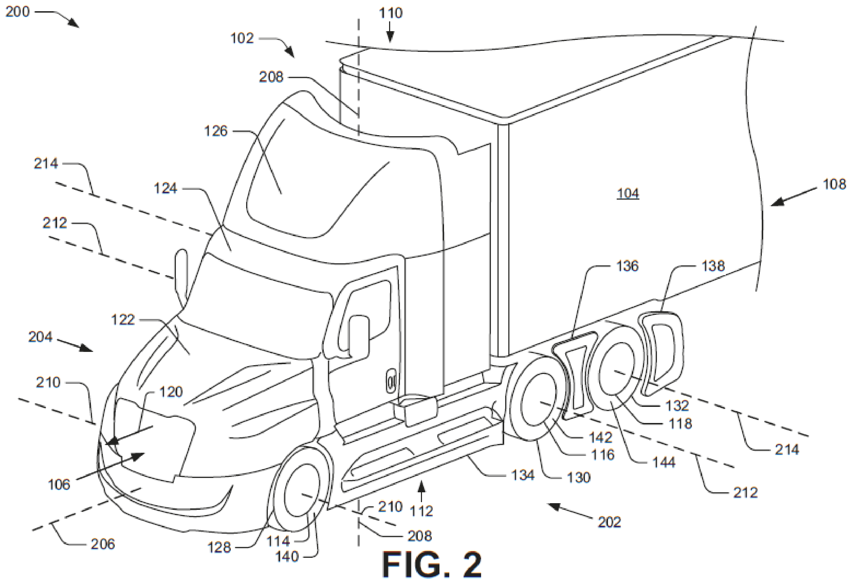

FIGS. 1 and 2 illustrate an example environment depicting a partial side view 100 and a partial perspective view 200, respectively, of a vehicle 102. In at least one implementation, the vehicle 102 is a commercial vehicle, such as a semi-truck, a box truck, a cargo van, a coach (e.g., bus), or the like. Accordingly, the vehicle 102 may be configured to tow another vehicle and/or load. In some implementations, the vehicle 102 may be a different type of vehicle, such as a tractor. In the depicted example, the vehicle 102 is a commercial truck including a cargo trailer 104 (which may also be referred to herein as a cargo compartment). FIGS. 1 and 2 are described collectively.

Various portions of the vehicle 102 are indicated generally in the figures. In particular, the vehicle 102 is shown including a forward end 106, a rearward end 108, a top 110, a bottom 112, a first side 202, and an opposing second side 204.

The vehicle 102 is shown including a first wheel 114, a second wheel 116, and a third wheel 118 each at the first side 202. Additionally, various axes are depicted by the figures. Specifically, a vehicle longitudinal axis 206 is depicted extending from the forward end 106 to the rearward end 108, a vertical axis 208 is depicted extending from the top 110 to the bottom 112, a vehicle lateral axis 210 is depicted extending coaxially to a vehicle axle coupled to the first wheel 114 of the vehicle 102, a vehicle lateral axis 212 is depicted extending coaxially to a vehicle axle coupled to the second wheel 116 of the vehicle 102, and a vehicle lateral axis 214 is depicted extending coaxially to a vehicle axle coupled to the third wheel 118 of the vehicle 102. The vehicle lateral axis 210 is parallel with the vehicle lateral axis 212 and the vehicle lateral axis 214; the vehicle longitudinal axis 206 is perpendicular to the vehicle lateral axis 210, the vehicle lateral axis 212, and the vehicle lateral axis 214; and the vertical axis 208 is perpendicular to the vehicle longitudinal axis 206, the vehicle lateral axis 210, the vehicle lateral axis 212, and the vehicle lateral axis 214. The vehicle longitudinal axis 206 extends in a longitudinal direction of the vehicle 102 (e.g., from the forward end 106 to the rearward end 108), whereas the vehicle lateral axis 210, the vehicle lateral axis 212, and the vehicle lateral axis 214 each extend in a lateral direction of the vehicle 102 (also referred to herein as a transverse direction) and may be referred to herein as transverse axes.

During conditions in which the vehicle 102 travels (e.g., while the vehicle 102 is propelled by an engine or other motive source configured to provide torque to the vehicle wheels), air flows against the forward end 106 in the longitudinal direction (e.g., the direction of the vehicle longitudinal axis 206) and may additionally flow against the forward end 106 at various angles relative to the longitudinal direction. A directional arrow 120 illustrates the direction of forward movement of the vehicle 102.

As air flows against the forward end 106, the air may be directed in various directions away from the forward end 106 by components of the vehicle 102 such as a lower front end panel 122, a windshield 124, an upper front end panel 126, and so forth. In some situations, air flowing against the components at the forward end 106 may be directed toward the sides of the vehicle 102 (e.g., the first side 202 and/or the second side 204), and some air flow may be directed toward the wheels of the vehicle 102 (e.g., the first wheel 114, the second wheel 116, the third wheel 118, etc.). As described further below, the vehicle 102 includes fairings configured to reduce drag associated with such air flow and increase an aerodynamic performance of the vehicle 102.

In the depicted example, the first wheel 114 is arranged toward the forward end 106 and is forward of both of the second wheel 116 and the third wheel 118, with the second wheel 116 arranged between the first wheel 114 and the third wheel 118 in the longitudinal direction (e.g., the direction of the vehicle longitudinal axis 206). In implementations, one or more of the first wheel 114, the second wheel 116, and the third wheel 118 may be driven by torque from the engine or other motive source of the vehicle 102 (e.g., an electric motor, etc.). As an example, the axle coupled to the first wheel 114 may be driven by the engine of the vehicle 102 such that the first wheel 114 receives torque from the engine, while the second wheel 116 and third wheel 118 may be coupled to respective axles that are not driven by the engine (referred to as floating axles). In at least one such implementation, the second wheel 116 and the third wheel 118 support the vehicle 102 but are not driven by the engine. However, this configuration is non-limiting, and other configurations are possible. As another example, the first wheel 114 and the second wheel 116 may be driven by the engine while the third wheel 118 is not driven by the engine.

Although FIGS. 1 and 2 depict the first wheel 114, the second wheel 116, and the third wheel 118 arranged at the first side 202, it should be appreciated that the second side 204 includes a similar configuration of wheels. Additionally, as described below, some implementations may include additional wheels arranged in tandem to the depicted wheels, e.g., two wheels arranged at the first side 202 and centered along the vehicle lateral axis 210, two wheels arranged at the first side 202 and centered along the vehicle lateral axis 212, and so forth. Each of the wheels is coupled to a respective tire. For example, the first wheel 114 is coupled to a first tire 128, the second wheel 116 is coupled to a second tire 130, the third wheel 118 is coupled to a third tire 132, and so forth. Each tire may be mounted to a respective rim of the respective wheel to which the tire is coupled. Further, it should be appreciated that the vehicle 102 may include a different number and/or arrangement of wheels and tires. For example, the vehicle 102 may include the first wheel 114 and the third wheel 118 arranged at the first side 202 and may not include the second wheel 116. As another example, the vehicle 102 may include additional wheels arranged forward or rearward of the second wheel 116 and/or third wheel 118. Other examples are possible, and the particular configuration of wheels depicted by the figures is non-limiting.

The vehicle 102 is depicted further including a forward side fairing 134, a central side fairing 136, and a rearward side fairing 138. A fairing assembly may include the forward side fairing 134, the central side fairing 136, and/or the rearward side fairing 138 in various combinations. As one example, the forward side fairing 134, the central side fairing 136, and the rearward side fairing 138 may be referred to collectively as a fairing assembly. As another example, the forward side fairing 134 and the rearward side fairing 138 may be referred to collectively as a fairing assembly. As another example, the forward side fairing 134 and the central side fairing 136 may be referred to collectively as a fairing assembly. As another example, the rearward side fairing 138 and the central side fairing 136 may be referred to collectively as a fairing assembly.

Although the vehicle 102 is depicted including each of the forward side fairing 134, the central side fairing 136, and the rearward side fairing 138, in some implementations, the vehicle 102 may include a different combination of fairings. As one example, the vehicle 102 may include the forward side fairing 134 and not the central side fairing 136 or the rearward side fairing 138. As another example, the vehicle 102 may include the rearward side fairing 138 and not the forward side fairing 134 or the central side fairing 136. As yet another example, the vehicle 102 may include the forward side fairing 134 and the rearward side fairing 138 and may not include the central side fairing 136. As yet another example, the vehicle 102 may include the rearward side fairing 138 and the central side fairing 136 and may not include the forward side fairing 134.

Although the forward side fairing 134, the central side fairing 136, and the rearward side fairing 138 are depicted on the first side 202 of the vehicle 102, it should be appreciated that the vehicle 102 may include a similar configuration of fairings on the second side 204 in a similar arrangement. The fairings on the second side 204 may be mirror-symmetric to the fairings of the first side 202. Further, although configurations are described herein in which the axles of the vehicle 102 include multiple wheels on each side of the vehicle 102 (e.g., there may be more than one wheel arranged at the first side 202 for a given axis), it should be appreciated that the fairings described herein may be utilized in configurations in which each axle includes a single wheel arranged at each side of the vehicle 102.

The forward side fairing 134, the central side fairing 136, and the rearward side fairing 138 are each shaped to guide (e.g., deflect) air flow away from the wheels and components at the bottom 112 of the vehicle 102. In doing so, the fairings reduce drag caused by air flowing against the vehicle 102, thus increasing the aerodynamic efficiency of the vehicle 102.

The forward side fairing 134, which may also be referred to herein as a forward lateral fairing, is arranged at least partially between the first wheel 114 and the second wheel 116. In the depicted example, the forward side fairing 134 is mounted to the vehicle 102 adjacent to the first tire 128 and adjacent to the second tire 130. Thus, in configurations in which the second wheel 116 is a drive wheel (e.g., a wheel receiving torque from the engine or other motive source of the vehicle 102), the forward side fairing 134 is arranged in front of at least one drive wheel. The forward side fairing 134 extends in the longitudinal direction of the vehicle 102 (e.g., the direction of vehicle longitudinal axis 206, extending from the forward end 106 to the rearward end 108) and additionally includes portions extending outwardly in the transverse direction of the vehicle 102 (e.g., the direction from the first side 202 to the second side 204, such that portions of the forward side fairing 134 extend angularly to the longitudinal direction away from the vehicle 102). For example, as described further below, the forward side fairing 134 is shaped to flare outward in the lateral (e.g., transverse) direction of the vehicle 102.

The central side fairing 136, which may also be referred to herein as a central lateral fairing, is arranged at least partially between the second wheel 116 and the third wheel 118 and is adjacent to both of the second tire 130 and the third tire 132 in the longitudinal direction. The rearward side fairing 138, which may be referred to herein as a rear lateral fairing, is arranged rearward of the third wheel 118 and adjacent to the third tire 132 in the longitudinal direction (e.g., opposite to the central side fairing 136 across the third tire 132). In implementations in which the vehicle 102 includes the first wheel 114 and the third wheel 118, the vehicle 102 may not include the central side fairing 136, and the forward side fairing 134 may be spaced apart from the rearward side fairing 138 by the third wheel 118. In implementations that include the central side fairing 136 and the rearward side fairing 138, a length from the central side fairing 136 to the forward end 106 of the vehicle 102 in the longitudinal direction is less than a length from the rearward side fairing 138 to the forward end 106 of the vehicle 102 in the longitudinal direction.

The forward side fairing 134, the central side fairing 136, and the rearward side fairing 138 are each shaped to provide aerodynamic characteristics to the vehicle 102 that result in reduced drag. In order to provide these aerodynamic characteristics without substantially increasing a weight of the vehicle 102, in some implementations, the fairings may be formed from a plastic material (e.g., a thermoplastic) or other durable lightweight material (e.g., a synthetic rubber). In implementations, one or more of the fairings may be formed from multiple materials. Forming different portions of the fairings from different materials may increase an effective surface area of the fairings while maintaining a durability and structural strength of the fairings. As one example, one of the materials may be more flexible than another of the materials. This may provide for extended borders or edges of the fairings that have desirable aerodynamic characteristics, including portions that may be subjected to contact with external objects such as other vehicles, environmental infrastructure, and the like.

Forming one or more of the fairings from two or more materials may further increase desirable aerodynamic characteristics in some implementations. For example, drag of the vehicle 102 may be further reduced, the weight of the fairings (and the vehicle 102 including the fairings) may be reduced, and so forth. The shape and materials of the fairings may enable the fairings to maintain desirable aerodynamic characteristics while subjected to air flow and deflect when in contact with external objects.

As an example, one or more of the fairings may be formed from each of a first material and a second material. The first material may be a thermoplastic elastomer based on olefin, and the second material may be an ethylene-propylene-diene-monomer rubber, as one example. However, this example is non-limiting, and other materials (e.g., other plastics, metals, composites, etc.) are possible.

Different materials forming the fairings may have different rigidities. As an example, the first material described above may have a first rigidity, and the second material described above may have a second rigidity, where the first rigidity may be greater (e.g., more rigid) than the second rigidity, or vice versa. The different rigidities may further support relative movement of different portions of the fairings without degradation of the fairings. The materials may be semi-flexible such that the materials return to a non-deformed condition after bending or otherwise being deformed by external forces.

In some implementations, the forward side fairing 134 may be configured to be disposed such that the forward side fairing 134 begins inboard e.g., in a direction toward an interior or longitudinal centerline of the vehicle 102, of an outer tire tread edge of a tire of a forward drive wheel (e.g., inboard of an outer tire tread edge of the first tire 128 and/or the second tire 130) and progresses outwards to end outboard, e.g., in a direction away from an interior or longitudinal centerline of the vehicle 102, of a wall of the tire of the forward drive wheel with respect to the longitudinal direction of the vehicle 102 (e.g., outboard of a wall 140 of the first tire 128 and/or a wall 142 of the second tire 130). In particular, the forward side fairing 134 may be mounted to the vehicle 102 such that a portion of the forward side fairing 134 facing the vehicle 102 is inboard of the outer tire tread edge (e.g., arranged more inward toward the vehicle 102 relative to the outer tire tread edge) and extends outboard of the outer tire tread edge (e.g., extends more outward from the vehicle 102 relative to the outer tire tread edge). The rearward side fairing 138 may be configured to be disposed such that the rearward side fairing 138 begins inboard of an outer tire tread edge of a tire of a rear drive wheel (e.g., an outer tire tread edge of the third tire 132) and progresses outwards to end outboard of a wall of the tire of the rear drive wheel with respect to the longitudinal direction of the vehicle 102 (e.g., outboard of an outer wall 144 of the third tire 132). At least a portion of the rearward side fairing 138 may have a concave cross-section in the transverse direction of the vehicle.

In some implementations, the central side fairing 136 may be configured to be disposed such that the central side fairing 136 begins inboard of an outer tire tread edge of a tire of a forward drive wheel (e.g., inboard of an outer tire tread edge of the second tire 130) and progresses outwards to end outboard of a wall of the tire of the forward drive wheel with respect to the longitudinal direction of the vehicle 102 (e.g., outboard of the wall 142 of the second tire 130).

In some implementations, the forward side fairing 134 is configured to be disposed at least partially in front of a drive wheel of an axle of the vehicle 102 with respect to a longitudinal direction of the vehicle 102 (e.g., in front of second wheel 116). The rearward side fairing 138 may be configured to be disposed at least partially aft of the drive wheel (e.g., rearward of the second wheel 116). The forward side fairing 134 and/or the rearward side fairing 138 may include a respective first portion made of a first material (e.g., a thermoplastic such as a thermoplastic elastomer based on olefin) and a respective second portion adjoining the first portion, with the second portion made of a second material that is different from the first material (e.g., ethylene-propylene-diene-monomer rubber).

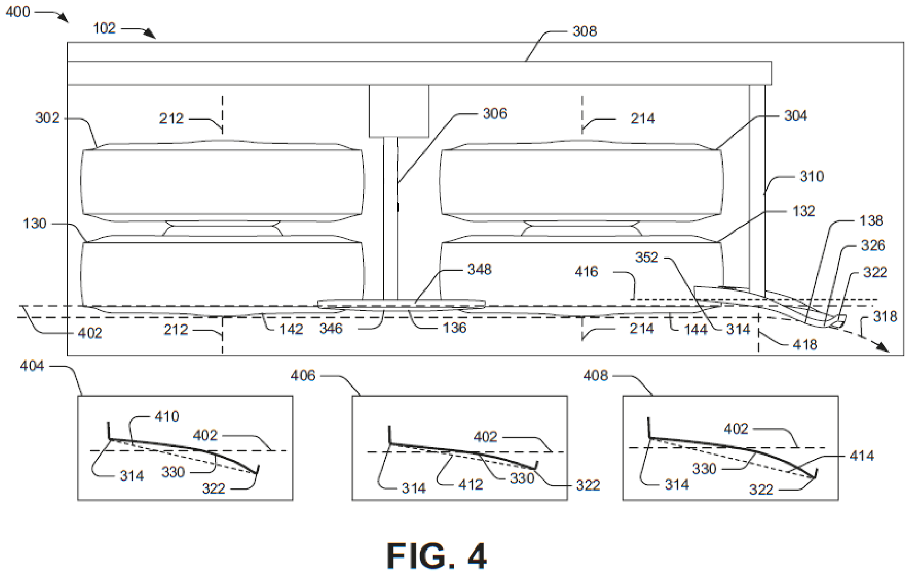

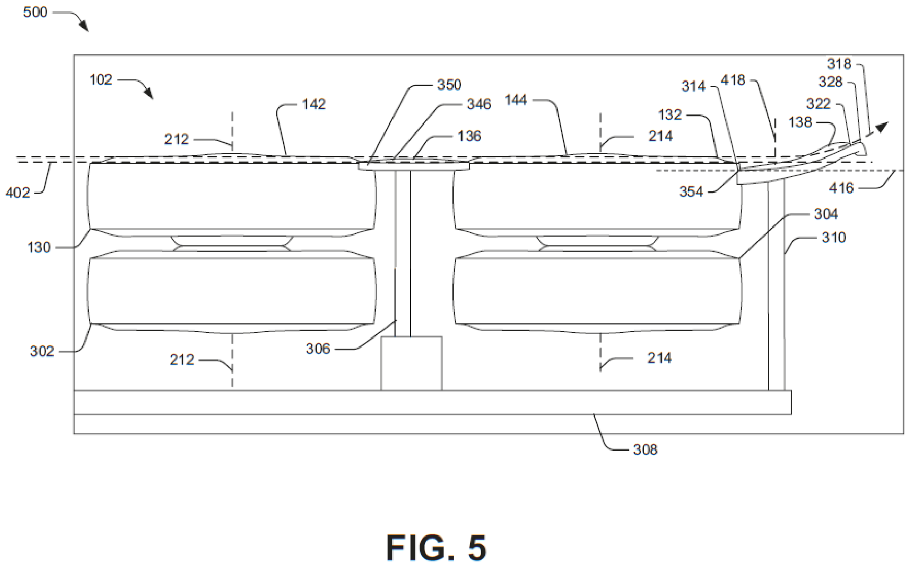

FIGS. 3-5 illustrate different partial views of the vehicle 102 and depict the wheels and fairings at the first side 202 of the vehicle 102. In particular, FIG. 3 depicts a partial perspective view 300 of the vehicle 102 showing the second wheel 116, third wheel 118, central side fairing 136, and rearward side fairing 138, FIG. 4 shows a top view 400 of the wheels and fairings, and FIG. 5 shows a bottom view 500 of the wheels and fairings. FIGS. 3-5 are described together below.

In the view shown in FIG. 3, the second wheel 116 is shown centered along the vehicle lateral axis 212, with the second tire 130 coupled to the second wheel 116. Additionally, an inboard tire 302 is shown centered along the vehicle lateral axis 212, adjacent to the second tire 130. The inboard tire 302 may be coupled to another wheel adjacent to the second wheel 116, where the inboard tire 302 and the second tire 130 are in a tandem arrangement. Similarly, the third wheel 118 is shown centered along the vehicle lateral axis 214, with the third tire 132 coupled to the third wheel 118. An inboard tire 304 may be coupled to another wheel adjacent to the third wheel 118, where the inboard tire 304 and the third tire 132 are in a tandem arrangement. The inboard tire 302 and the inboard tire 304 may be referred to herein as inboard tires, and the second tire 130 and the third tire 132 may be referred to herein as outboard tires and/or outward tires.

The central side fairing 136 is depicted coupled to a first arm 306 of a frame 308 of the vehicle 102, and the rearward side fairing 138 is depicted coupled to a second arm 310 of the frame 308. The first arm 306 and the second arm 310 may be referred to herein as supports of the fairings. The central side fairing 136 is arranged between the second tire 130 and the third tire 132, and the rearward side fairing 138 is spaced apart from the central side fairing 136 by the third tire 132. The central side fairing 136 and the rearward side fairing 138 may be at least partially aligned with each other in the longitudinal direction of the vehicle 102 while mounted to the vehicle 102 (e.g., coupled to the respective arms of the frame 308). For example, as shown by FIG. 4, the central side fairing 136 and the rearward side fairing 138 are aligned along an axis 402 (e.g., each of the central side fairing 136 and the rearward side fairing 138 are intersected by the axis 402), with the axis 402 parallel to the vehicle longitudinal axis 206 shown in FIG. 2 and extending in the longitudinal direction of the vehicle 102.

The third tire 132 is shown having a radius of curvature 312. Each tire of the vehicle 102 may have a radius of curvature equal to the radius of curvature 312, in some implementations. Further, the fairings described herein may have arcuate edges that approximate the radius of curvature 312 (e.g., at least a portion of the arcuate edges may have a radius of curvature that is within five percent difference of the radius of curvature 312). For example, the rearward side fairing 138 is shown including a forward arcuate edge 314 having a curvature that approximately matches the radius of curvature 312 of the third tire 132 (e.g., a radius of curvature of at least a portion of the forward arcuate edge 314 may be equal to the radius of curvature 312 or within a range of +/- five percent difference from the radius of curvature 312). The forward arcuate edge 314 includes an upper corner 352 and a lower corner 354, and the upper corner 352 and the lower corner 354 may be rounded. By approximately matching the curvature of the edges of the fairings to the curvature of the tires of the vehicle 102, the fairings may more effectively guide air flow away from the wheels of the vehicle 102 and increase vehicle aerodynamic performance.

In some implementations, the central side fairing 136 and the rearward side fairing 138 may be mounted to the vehicle 102 in a vertically aligned arrangement such that a top surface of the central side fairing 136 is at substantially a same height as a top surface of the rearward side fairing 138. In some implementations, the central side fairing 136 and the rearward side fairing 138 may be mounted to the vehicle 102 in an arrangement in which the central side fairing 136 and the rearward side fairing 138 are substantially vertically centered relative to each other (e.g., with a center of each of the central side fairing 136 and the rearward side fairing 138 arranged at substantially a same height). The top surface of the central side fairing 136 and the top surface of the rearward side fairing 138 being "substantially at a same height" may refer to an arrangement in which the surfaces are vertically offset relative to each other by an amount less than one centimeter. However, it should be appreciated that in some implementations, the top surface of the central side fairing 136 and the top surface of the rearward side fairing 138 may be at different vertical heights. For example, the top surface of the central side fairing 136 may be arranged vertically higher or lower than the top surface of the rearward side fairing 138 by an amount equal to or greater than one centimeter.

In the view depicted by FIG. 3, various arrows are shown that illustrate a direction of air flow across the surfaces of the central side fairing 136 and the rearward side fairing 138. In particular, the figure depicts a first line 316 representing a first portion of air flow, a second line 318 representing a second portion of air flow, and a third line 320 representing a third portion of air flow. In the depicted example, the air flow across the central side fairing 136 continues longitudinally from the central side fairing 136 toward the rearward side fairing 138. The shape of the central side fairing 136 may reduce air flow between the second tire 130 and the third tire 132 and may additionally reduce air flow toward components arranged at the bottom 112 of the vehicle 102, such as the first arm 306, the second arm 310, the frame 308, the inboard tire 302, and the inboard tire 304. Reducing the air flow to the components at the bottom 112 may reduce a drag experienced by the vehicle 102 while in motion (e.g., traveling and propelled by the engine or other motive source).

The air flowing across the rearward side fairing 138 is guided (e.g., directed) by the rearward side fairing 138 in different directions based on which portions of the rearward side fairing 138 the air flow contacts. A profile of the rearward side fairing 138 begins at or slightly inboard of an outer tire tread edge of the third tire 132 coupled to the third wheel 118 and progresses outward until outboard of the wall of the third tire 132. The cross-sectional profile of the rearward side fairing 138 is arranged in a plane of the longitudinal direction of the vehicle 102 and the transverse direction of the vehicle 102, the plane being also referred to as an XY-plane. For example, as depicted by FIG. 4, the forward arcuate edge 314 is arranged inward from the axis 402, toward the frame 308 of the vehicle 102, and a rearward edge 322 is arranged outward from the axis 402, away from the frame 308 of the vehicle 102. In this example, the forward arcuate edge 314 is inboard of a wall 144 of the third tire 132, where the wall is an outward-facing surface of the third tire 132 (e.g., a surface facing away from the vehicle 102 in the outward direction).

For example, the rearward side fairing 138 includes a depression 324 formed between a first protruding portion 326 and a second protruding portion 328. The depression 324, the first protruding portion 326, and the second protruding portion 328 are each formed by an outward surface 330 of the rearward side fairing 138. The depression 324 is arranged vertically between the first protruding portion 326 and the second protruding portion 328. In other words, the depression 324 includes a recessed or indented region of the outward surface 330 that is set back relative to the general outward curvature, such that the outward surface 330 at the depression 324 is located further inward (toward the vehicle or away from the normal direction) compared to adjacent portions of the outward surface 330. While the rearward side fairing 138 is coupled to the vehicle 102, the outward surface 330 curves outwardly (e.g., away from the frame 308) and extends longitudinally (e.g., in the longitudinal direction of the vehicle 102), as depicted in particular in FIGS. 4 and 5. Specifically, while coupled to the vehicle 102, the rearward side fairing 138 is shaped such that the forward arcuate edge 314 of the rearward side fairing 138 is more inward to the vehicle 102 than the rearward edge 322 of the rearward side fairing 138 (e.g., the rearward edge 322 is arranged more outward from the frame 308 relative to the forward arcuate edge 314).

FIG. 4 further depicts an inset 404, an inset 406, and an inset 408. The inset 404 illustrates a profile (e.g., curvature) of the rearward side fairing 138 along the first line 316, the inset 406 illustrates a profile of the rearward side fairing 138 along the second line 318, and the inset 408 illustrates a profile of the rearward side fairing 138 along the third line 320. The first line 316, the second line 318, and the 320 are each shown by FIG. 3. In each inset, a respective axis is shown extending from the forward arcuate edge 314 to the rearward edge 322. In particular, the inset 404 depicts axis 410 intersecting the forward arcuate edge 314 and the rearward edge 322, the inset 406 depicts axis 412 intersecting the forward arcuate edge 314 and the rearward edge 322, and the inset 408 depicts axis 414 intersecting the forward arcuate edge 314 and the rearward edge 322. The axis 410, the axis 412, and the axis 414 are angled relative to the axis 402 that extends in the longitudinal direction of the vehicle 102.

As depicted by the inset 404, the inset 406, and the inset 408, the outward surface 330 of the rearward side fairing 138 curves in a concave manner from the forward arcuate edge 314 to the rearward edge 322. In particular, the inset 404, the inset 406, and the inset 408 depict the outward surface curving away from the axis 410, the axis 412, and the axis 414, respectively. However, while mounted to the vehicle 102, the rearward side fairing 138 is oriented to the vehicle 102 such that the outward surface 330 curves from the forward arcuate edge 314 to the rearward edge 322 without curving toward the vehicle 102. For example, the profile of the outward surface 330 along the first line 316 as depicted by inset 404 curves away from the frame 308 of the vehicle 102 as the profile progresses from the forward arcuate edge 314 to the rearward edge 322. Additionally, the profile of the outward surface 330 along the second line 318 as depicted by inset 406 curves away from the frame 308 of the vehicle 102 as the profile progresses from the forward arcuate edge 314 to the rearward edge 322. Additionally, the profile of the outward surface 330 along the third line 320 as depicted by inset 408 curves away from the frame 308 of the vehicle 102 as the profile progresses from the forward arcuate edge 314 to the rearward edge 322. The profiles of the outward surface 330 depicted by the inset 404, the inset 406, and the inset 408 do not transition from curving away from the frame 308 to curving toward the frame as the outward surface 330 progresses from the forward arcuate edge 314 to the rearward edge 322.

Thus, although the outward surface 330 has a concave profile along lines horizontal to the vehicle 102 such as the first line 316, the second line 318, and the third line 320, the outward surface 330 curves outward away from the vehicle 102 as the outward surface 330 progresses in the direction toward the rearward end 108 of the vehicle 102 while the rearward side fairing 138 is mounted to the vehicle 102 (e.g., with the rearward edge 322 being more outward from the vehicle 102 and the forward arcuate edge 314 being less outward from the vehicle 102). The outward surface 330 is bounded and/or defined, at least in part, by the forward arcuate edge 314 and the rearward edge 322.

The second line 318 represents air flowing across the depression 324. The air flowing across the depression 324 may be directed outward from the vehicle 102, e.g., away from the components at the bottom 112 of the vehicle 102, as depicted by FIGS. 3-5. In particular, air flowing against the outward surface 330 may be directed along the curvature of the outward surface 330 in the outward direction away from the vehicle 102, e.g., away from the first side 202 of the vehicle 102 (with the first side 202 depicted in FIG. 2). Further, as the air flows against the depression 324, the air may be directed by the depression 324 substantially outward to the vehicle 102 and rearward of the rearward side fairing 138 as indicated by the second line 318. Directing the air flow in this manner may decrease drag experienced by the vehicle 102 and thereby increase aerodynamic performance of the vehicle 102.

It should be appreciated that while mounted to the vehicle 102, the outward surface 330 may curve continuously outward (e.g., in the outward direction) from the forward arcuate edge 314 to the rearward edge 322 across the depression 324 without curving in the inward direction toward the vehicle 102. In particular, the depression 324 is arranged less outward from the frame 308 than the first protruding portion 326 and the second protruding portion 328 adjacent to the depression 324 (e.g., closer to the vehicle 102 in the direction parallel with the vehicle lateral axis 214, the vehicle lateral axis 212, etc.). However, the depression 324 is arranged more outward from the frame 308 than the forward arcuate edge 314 (e.g., the forward arcuate edge 314 is arranged less outward from the frame 308 relative to the rearward edge 322 and the depression 324).

The outward surface 330 thus may curve concavely (e.g., with a concave profile) from the forward arcuate edge 314 to the rearward edge 322 across the depression 324, with the rearward side fairing 138 is mounted to the vehicle 102 such that the depression 324 is arranged more outward from the vehicle 102 than the forward arcuate edge 314. Further, while the rearward side fairing 138 is mounted to the vehicle 102, the outward surface 330 curves outward from the forward arcuate edge 314 to the rearward edge 322 across the depression 324 without curving back toward the frame 308 (e.g., with a distance between the forward arcuate edge 314 and the frame 308 in the direction parallel with the vehicle lateral axis 214, the vehicle lateral axis 212, etc. being smaller than respective distances between each other portion of the outward surface 330 and the frame 308).

The curvature of the outward surface 330 may be referred to as an air ramp and provides outward momentum to the flow of air (e.g., air streams), which reduces a likelihood of air flowing inboard and against other components of the vehicle 102. Thus, the rearward side fairing 138 controls aerodynamic flow near the third wheel 118 and the third tire 132 of the vehicle 102. The central side fairing 136 and the rearward side fairing 138 serve to decrease anti-motive aerodynamic forces in close proximity to the second wheel 116 and the third wheel 118 and also condition the flow for better performance downstream around shapes and features of other components of the vehicle 102. The surface shapes and features of the central side fairing 136 and the rearward side fairing 138 can increase the marginal performance of the vehicle 102 with respect to aerodynamics by more than 50%.

In the implementations shown, the first protruding portion 326 and the second protruding portion 328 extend outward by a same amount. However, in some implementations, the first protruding portion 326 may extend outward by a different amount relative to the second protruding portion 328.

The first line 316 represents air flowing across the first protruding portion 326, and the third line 320 represents air flowing across the second protruding portion 328. As indicated by the first line 316, the first protruding portion 326 may guide air flow in the rearward direction of the rearward side fairing 138 as well as outward from the vehicle 102 (e.g., away from the first side 202). Similarly, as indicated by the third line 320, the second protruding portion 328 may guide the air flow in the rearward direction of the rearward side fairing 138 as well as outward from the vehicle 102.

In some situations, the air flow guided by the first protruding portion 326 and/or the air flow guided by the second protruding portion 328 may be directed in the direction of the depression 324 and may mix and/or converge with air flowing across the depression 324 (e.g., the air flow indicated by the second line 318). Mixing the air flow across the depression 324 in this manner may further reduce drag experienced by the vehicle 102 and increase the aerodynamic performance of the vehicle 102. For example, air that may otherwise flow toward and around the cargo trailer 104 of the vehicle 102, landing gear of the cargo trailer 104 coupled to the vehicle 102, or other components can be diverted, and drag is reduced.

Furthermore, FIG. 3 depicts a tire clearance gap 332 between the second tire 130 and the central side fairing 136, a tire clearance gap 334 between the central side fairing 136 and the third tire 132, and a tire clearance gap 336 between the rearward side fairing 138 and the third tire 132. The tire clearance gaps reduce a likelihood of tire-to-fairing contact under normal articulation of a suspension of the vehicle 102. Assembly tolerances and tire size variances are also considered. Since the forward side fairing 134, the central side fairing 136, and the rearward side fairing 138 cover respective portions of the vehicle 102 and guide air flow, the fairings may also be referred to herein as aero fairings, panels, and/or aero panels.

The tire clearance gap 332 is formed between the second tire 130 and a forward arcuate edge 338 of the central side fairing 136, and the tire clearance gap 334 is formed between the third tire 132 and a rearward arcuate edge 340 of the central side fairing 136. The forward arcuate edge 338 is opposite to the rearward arcuate edge 340 across a center 342 of the central side fairing 136.

In the arrangement depicted by FIGS. 3-5, while the rearward arcuate edge 340 of the central side fairing 136 faces the forward arcuate edge 314 of the rearward side fairing 138 and the center 342 of the central side fairing 136 is aligned horizontally (e.g., in the transverse direction from the first side 202 to the second side 204) and vertically (e.g., in the vertical direction from the top 110 to the bottom 112) to a center 344 of the rearward side fairing 138, the first protruding portion 326 and the second protruding portion 328 extend outboard of an outward surface 346 of the central side fairing 136. In particular, as depicted by FIGS. 4 and 5, the first protruding portion 326 and the second protruding portion 328 are arranged further in the outward direction from the axis 402 relative to the outward surface 346 of the central side fairing 136 (e.g., the outward surface 346 of the central side fairing 136 extends less outward than each of the first protruding portion 326 and the second protruding portion 328).

The rearward arcuate edge 340 of the central side fairing 136 is shaped to face the rearward side fairing 138 while the central side fairing 136 and the rearward side fairing 138 are mounted to the vehicle 102. The central side fairing 136 and the rearward side fairing 138 are each offset from the frame 308 in the lateral direction of the vehicle 102 (e.g., the direction of the vehicle lateral axis 212 and the vehicle lateral axis 214). In configuration shown by FIGS. 3-5, a top 348 of the central side fairing 136 and a bottom 350 of the central side fairing 136 are substantially equally spaced apart from the frame 308 of the vehicle 102 in the lateral direction of the vehicle 102. Further, in the configuration shown by FIGS. 3-5, the rearward arcuate edge 340 of the central side fairing 136 and a forward arcuate edge 314 of the central side fairing 136 are substantially equally spaced apart from the frame 308 of the vehicle 102 in the lateral direction of the vehicle 102. Substantially equally spaced refers to less than five percent difference in spacing, for example.

Further, in the configuration shown by FIGS. 3-5, an entirety of the forward arcuate edge 314 of the rearward side fairing 138 is aligned with a plane 416 intersected by a lateral axis 418 of the vehicle 102 in a direction substantially normal to the plane 416. The plane 416 and the lateral axis 418 are depicted by FIG. 4.

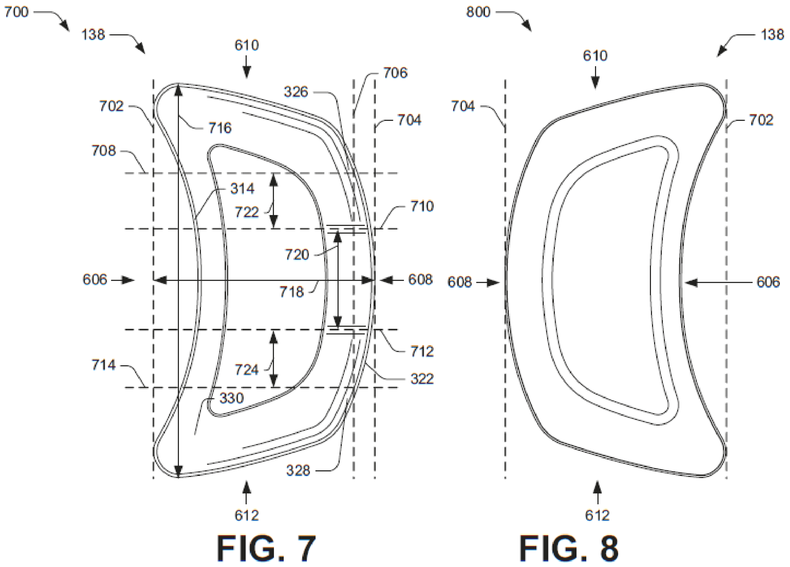

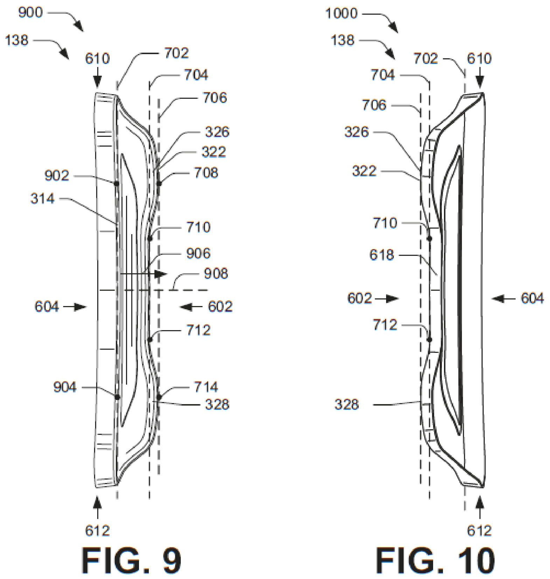

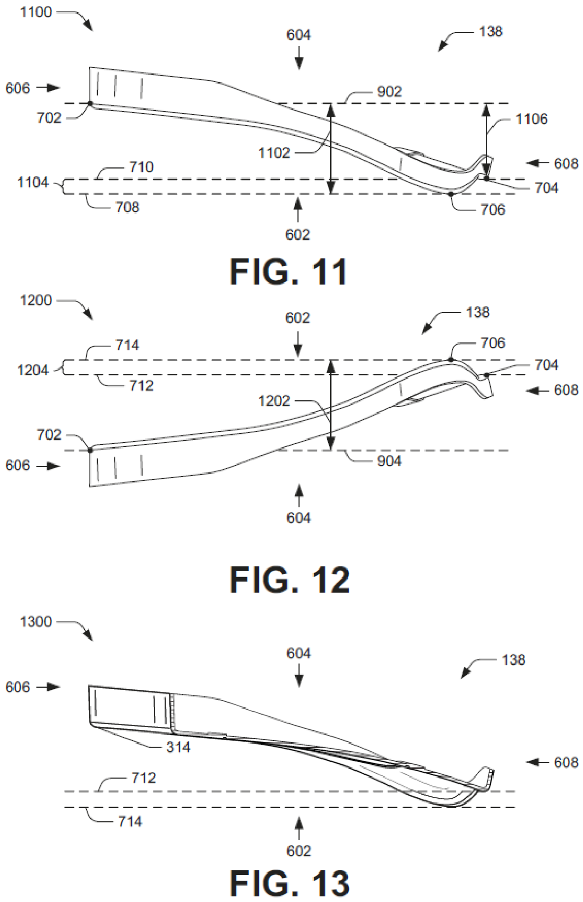

FIGS. 6-13 depict various views of the rearward side fairing 138 separated from the vehicle 102. In particular, FIG. 6 depicts a perspective view 600 of the rearward side fairing 138, FIG. 7 depicts an outward view 700 of the rearward side fairing 138 (e.g., a view of an outward side 602 of the rearward side fairing 138), and FIG. 8 depicts an inward view 800 of the rearward side fairing 138 (e.g., a view of an inward side 604 of the rearward side fairing 138 opposite to the outward side 602). FIG. 9 depicts a view 900 of a first end 606 of the rearward side fairing 138, FIG. 10 depicts a view 1000 of a second end 608 of the rearward side fairing 138 opposite to the first end 606, FIG. 11 depicts a view 1100 of an upper end 610 the rearward side fairing 138, FIG. 12 depicts a view 1200 of a lower end 612 of the rearward side fairing 138 opposite to the upper end 610, and FIG. 13 depicts a sectional view 1300 of the rearward side fairing 138 from the upper end 610. FIGS. 6-13 are described herein collectively.

As depicted in the perspective view 600 of FIG. 6, the rearward side fairing 138 is shown including a central portion 614. In some implementations, the central portion 614 may be formed from a first material as described above (e.g., a thermoplastic, such as a thermoplastic elastomer based on olefin) and other portions of the rearward side fairing 138 may be formed from a second material different from the first material (e.g., ethylene-propylene-diene-monomer rubber). However, in some implementations, an entirety of the rearward side fairing 138 may be formed from a same material (e.g., the entire rearward side fairing 138 may be molded together as a single unit from a single material). For example, the central portion 614 may be formed as part of the outward surface 330.

The outward surface 330 of the rearward side fairing 138 includes rounded or chamfered edges, as depicted by the figures. As described above, the outward surface 330 forms the depression 324, the first protruding portion 326, and the second protruding portion 328. The depression 324 may be formed at least in part by the rearward edge 322 arranged opposite to the forward arcuate edge 314 across the center 344 of the rearward side fairing 138 (e.g., with the center 344 at the outward surface 330). A radius of curvature of the forward arcuate edge 314 may approximate the radius of curvature 312 of the tires of the vehicle 102 in some implementations, as described above. Further, the forward arcuate edge 314 may form a sidewall 618 extending around a perimeter of the rearward side fairing 138 at the inward side 604.

The central portion 614 of the rearward side fairing 138 may be referred to herein as a center aero panel of the rearward side fairing 138. The outward surface 330 may be referred to herein as an edge region of the rearward side fairing 138 and/or an extension of the rearward side fairing 138. The outward surface 330 reduces flow diversions. As a result, the outward momentum of the air flow compelled by the air ramp formed by the outward surface 330 may be sustained, and aerodynamic performance of the rearward side fairing 138 may be increased.

The outward surface 330 of the rearward side fairing 138 begins at a distance inboard, e.g., in a direction toward the interior or frame of the vehicle 102, of the tire tread and include the first protruding portion 326 and the second protruding portion 328, forming a kickout feature that captures air deflecting off the back edge of the second tire 130 and diverts it outboard and around the third tire 132. The first protruding portion 326 and the second protruding portion 328 may divert air flow that would otherwise flow toward and around non-aerodynamic features of the vehicle 102, such as the cargo trailer 104, wheels, axles, and other components. The outboard vertical surface lines of the outward surface 330 of the rearward side fairing 138 are generally concave at portions forward of the depression 324, first protruding portion 326, and second protruding portion 328. The resulting air stream may be convergent and may have an accelerated flow speed relative to air flowing against other portions of the vehicle 102.

In the outward view 700 depicted by FIG. 7, the rearward side fairing 138 is shown from the outward side 602. Various axes are shown aligned with different features of the rearward side fairing 138. In particular, FIG. 7 depicts an axis 702 aligned with rounded corners of the forward arcuate edge 314, an axis 704 parallel with the axis 702 and aligned with the rearward edge 322 at the depression 324, and an axis 706 parallel with both of the axis 704 and the axis 702 and aligned with the first protruding portion 326 and the second protruding portion 328. The axis 702 and the axis 704 are also shown in the inward view 800 of FIG. 8.

FIG. 7 additionally depicts a plurality of axes perpendicular to each of the axis 702, the axis 704, and the axis 706. Specifically, an axis 708 is shown intersecting the first protruding portion 326, an axis 710 is shown arranged at a location at which the outward surface 330 transitions from the first protruding portion 326 to the depression 324, an axis 712 is shown arranged at a location at which the outward surface 330 transitions from the second protruding portion 328 to the depression 324, and an axis 714 is shown intersecting the second protruding portion 328. The axis 708, the axis 710, the axis 712 and the axis 714 are parallel to each other and perpendicular to the axis 702, the axis 704, and the axis 706.

Various lengths between the axes are shown and indicate lengths of corresponding portions of the rearward side fairing 138. In particular, FIG. 7 depicts a length 716 extending between opposing rounded corners formed by the forward arcuate edge 314, a length 718 extending between the axis 702 aligned with the rounded corners of the forward arcuate edge 314 and the axis 704 aligned with the rearward edge 322 at the depression 324, and a length 720 between the axis 710 and the axis 712 at the depression 324. In the example shown, the length 716 is greater than the length 718, and the length 718 is greater than the length 720. In some implementations, the length 720 may be between twenty percent and twenty-five percent of the length 716. In some implementations, the length 720 may be approximately two-hundred millimeters, and the length 716 may be approximately nine-hundred millimeters. A length 722 between the axis 710 and the axis 708 may be approximately one-hundred-fifty millimeters, and a length 724 between the axis 712 and the axis 714 may be approximately one-hundred-fifty millimeters. The length 722 and the length 724 are both in the direction parallel with the axis 702, axis 704 and axis 706. However, other relative dimensions are possible.

As the air flows across the tires of the vehicle 102, the rearward side fairing 138 diverts the high-speed flow away from components of the vehicle 102 such as bogies of a trailer of the vehicle 102 (e.g., a subassembly of wheels such as the second wheel 116 and third wheel 118, axles coupled to the wheels, suspension components, and so forth used to support the cargo trailer 104). In configurations in which the vehicle 102 includes trailer skirts, the extent of air flow kick out can be reduced in the mid-section of the rearward side fairing 138 where the flow transfers from the rearward side fairing 138 to trailer skirts and/or other components downstream of the rearward side fairing 138 by way of the depression 324. Additionally, the first protruding portion 326 and the second protruding portion 328 increase air flow kick out at the top and bottom portions of the rearward side fairing 138 outside of the area of the trailer skirts. The top section of the rearward side fairing 138 may shield landing gear of a trailer of the vehicle 102 from receiving air flow, and the bottom section of the rearward side fairing 138 may ease a transition of air flowing from the rearward side fairing 138 to the trailer skirts, which may reduce drag.

FIG. 9 depicts additional axes aligned with different features of the rearward side fairing 138 as well as various lengths between the axes. Axes arranged perpendicular to the plane of view of the figure (e.g., extending toward or away from the plane of view) are indicated using dots. For example, an axis 902 is depicted horizontally aligned with the axis 708, where the axis 902 extends perpendicular to the plane of view of the figure. Further, an axis 904 is depicted horizontally aligned with the axis 714, where the axis 904 extends perpendicular to the plane of view of the figure and parallel with the axis 902. A normal direction 906 relative to the outward surface 330 at the location of the forward arcuate edge 314 is depicted, where the normal direction 906 is away from the vehicle 102 during conditions in which the rearward side fairing 138 is coupled to the vehicle 102, as described above (e.g., in the direction parallel with an axis 908, where the axis 908 extends from the outward side 602 to the inward side 604 and is perpendicular to the axis 904, the axis 706, etc.).

The depression 324 extends opposite to the normal direction 906. In contrast, the first protruding portion 326 and the second protruding portion 328 extend in the normal direction 906. The depression 324 thus forms a channel or indentation in the outward surface 330 between the first protruding portion 326 and the second protruding portion 328. However, as described above, the outward surface 330 may curve continuously from the forward arcuate edge 314 to the rearward edge 322 across the center 344 and the depression 324. As such, the depression 324 is further inward than the first protruding portion 326 and the second protruding portion 328 but is not further inward than the center 344 and the forward arcuate edge 314. In the implementations shown, the depression 324 is centered relative to the rearward edge 322. However, in some implementations, the depression 324 may be offset in the vertical direction relative to the center 344 (e.g., the depression 324 may be arranged more toward the first protruding portion 326 or more toward the second protruding portion 328).

In the view shown by FIG. 9, the axis 708 is depicted aligned with the axis 714 along the axis 706. For example, the axis 706 intersects both of the axis 708 and the axis 714. The location at which the axis 708 intersects the axis 706 may be referred to herein as a peak of the first protruding portion 326 (e.g., a portion of the first protruding portion 326 that is arranged furthest in the outward direction and the normal direction 906). The location at which the axis 714 intersects the axis 706 may be referred to herein as a peak of the second protruding portion 328. The peak of the first protruding portion 326 and the peak of the second protruding portion 328 may thus extend outward by a same amount. A length between the peak of the first protruding portion 326 and the peak of the second protruding portion 328 is a sum of each of the length 722, the length 720, and the length 724 shown by FIG. 7 and described above. In some implementations the length between the peak of the first protruding portion 326 and the peak of the second protruding portion 328 is between fifty percent and sixty percent of the length 716 of the forward arcuate edge 314. In some instances, the length between the peak of the first protruding portion 326 and the peak of the second protruding portion 328 is five-hundred millimeters. As depicted by FIG. 10, the first protruding portion 326 and the second protruding portion 328 each curve to the sidewall 618 of the rearward side fairing 138.

FIGS. 11 and 12 depict the upper end 610 and the lower end 612, respectively, of the rearward side fairing 138. A length 1102 is shown between the axis 902 and the axis 708, where the axis 902 intersects the forward arcuate edge 314 and the axis 702, and the axis 708 intersects the axis 706 and the first protruding portion 326. The length 1102 is in the direction from the inward side 604 to the outward side 602 and indicates an offset between the forward arcuate edge 314 and the first protruding portion 326 in the direction from the inward side 604 to the outward side 602 (which may be referred to herein as the outward direction and/or the normal direction 906).

A length 1104 is shown between the axis 710 and the axis 708 with the length 1104 extending in the outward direction. The axis 710 intersects the axis 704, and the axis 708 intersects the axis 706. The length 1104 indicates an offset between the depression 324 and the first protruding portion 326 in the outward direction.

Further, a length 1106 is shown between the axis 902 and the axis 704, the axis 704 aligned with the rearward edge 322 at the depression 324, as shown by FIG. 7. The length 1106 indicates an offset between the forward arcuate edge 314 and the depression 324 in the outward direction (e.g., the normal direction 906). The length 1106 is less than the length 1102 and greater than the length 1104.

FIG. 12 depicts a length 1202 between the axis 904 and the axis 714, with the axis 714 intersecting the axis 706 and the axis 904 intersecting the axis 702. The length 1202 indicates an offset between the forward arcuate edge 314 and the depression 324 in the outward direction. The figure further depicts a length 1204 between the axis 714 and the axis 712, with the axis 712 intersecting the axis 704. The length 1204 indicates an offset between the depression 324 and the second protruding portion 328 in the outward direction. By configuring the rearward side fairing 138 as described above, the rearward side fairing 138 increases the aerodynamic performance of the vehicle 102 while the rearward side fairing 138 is coupled (e.g., mounted) to the vehicle 102.

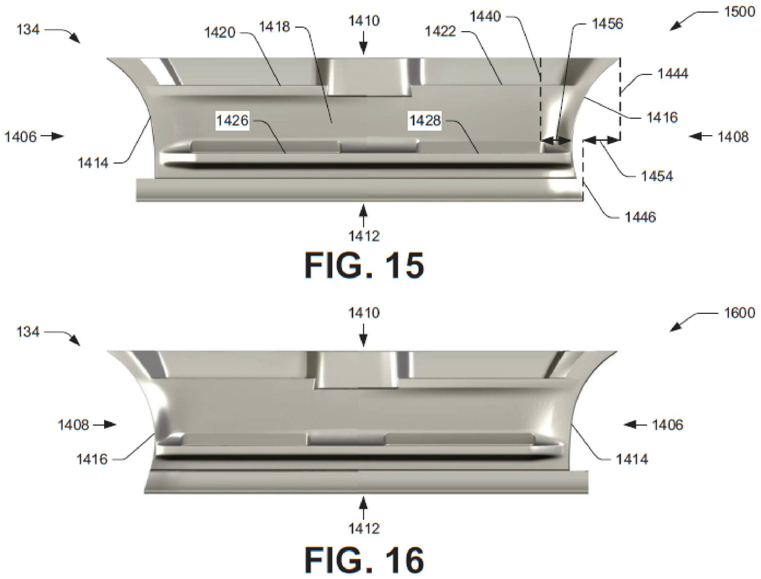

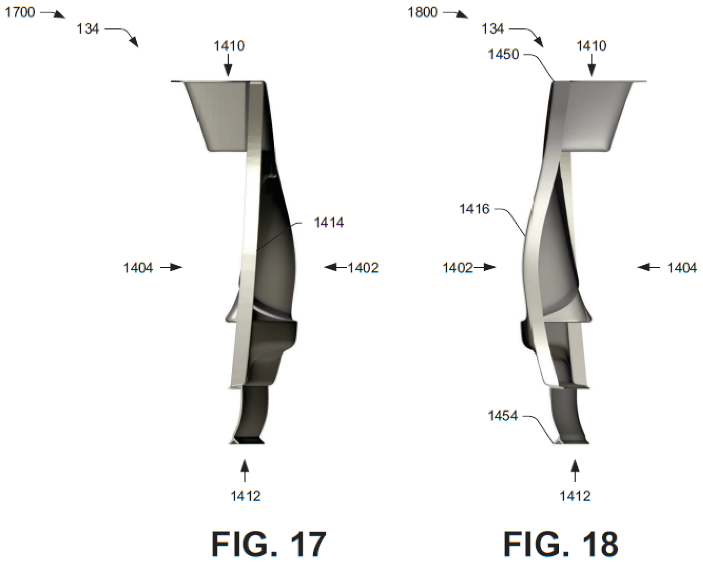

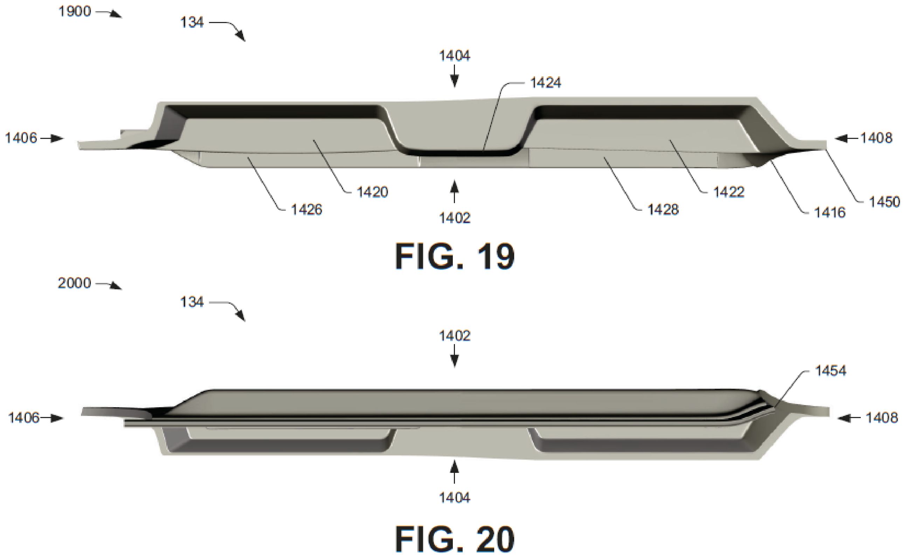

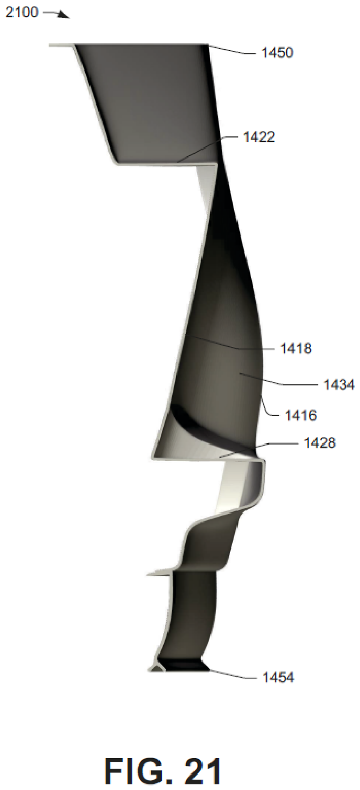

Referring to FIGS. 14-21, various views of the forward side fairing 134 are shown. In particular, FIG. 14 depicts a perspective view 1400 of the forward side fairing 134, FIG. 15 depicts a view 1500 of an outward side 1402 of the forward side fairing 134, and FIG. 16 depicts a view 1600 of an inward side 1404 of the forward side fairing 134. FIGS. 17 and 18 depict a view 1700 of a first end 1406 and a view 1800 of an opposing second end 1408, respectively, of the forward side fairing 134. FIGS. 19 and 20 depict a view 1900 of an upper end 1410 and a view 2000 of a lower end 1412, respectively, of the forward side fairing 134. FIG. 21 depicts a sectional view 2100 of the forward side fairing 134. FIGS. 14-21 are described collectively below.

While the forward side fairing 134 is installed in the vehicle 102, the first end 1406 is arranged toward the forward end 106 of the vehicle 102, while the second end 1408 is arranged away from the forward end 106 of the vehicle 102. The outward side 1402 faces outward from the vehicle 102, while the inward side 1404 faces inward to the vehicle 102. The upper end 1410 is arranged away from a surface on which the vehicle 102 sits, and the lower end 1412 is arranged opposite to the upper end 1410 and toward the surface on which the vehicle 102 sits.

The forward side fairing 134 includes a forward arcuate edge 1414 and a rearward arcuate edge 1416. The forward arcuate edge 1414 may be arranged adjacent to the first tire 128, and the rearward arcuate edge 1416 may be arranged adjacent to the second tire 130. A radius of curvature of the forward arcuate edge 1414 may be approximately equal to a radius of curvature of the first tire 128, and a radius of curvature of the rearward arcuate edge 1416 may be approximately equal to a radius of curvature of the second tire 130.

When coupled to the vehicle 102, the forward side fairing 134 includes a recessed surface 1418 that is offset in an inward direction toward the frame 308 of the vehicle 102 (shown by FIGS. 3-5). The recessed surface 1418 is offset in the inward direction relative to the forward arcuate edge 1414 and the rearward arcuate edge 1416. The forward arcuate edge 1414 and the rearward arcuate edge 1416 thus project outward from the recessed surface 1418 and may be formed together with the recessed surface 1418 as a single piece (e.g., formed from a single continuous piece of material).

The forward side fairing 134 further includes a first upper step 1420 and a second upper step 1422 spaced apart from each other by an extension 1424. Additionally, the forward side fairing 134 includes a first lower step 1426 and a second lower step 1428 spaced apart from each other by a curved surface 1430. The extension 1424 and the curved surface 1430 may be centered relative to each other (e.g., centered in the longitudinal direction parallel with an axis 1432).

The forward side fairing 134 forms a flared section 1434 at the second end 1408. The flared section 1434 is formed at least in part by the rearward arcuate edge 1416 and includes a flared surface curving in the outward direction from the recessed surface 1418 to the rearward arcuate edge 1416.

FIG. 14 includes an enlargement 1436 of a portion 1438 of the forward side fairing 134 depicting a magnified view of the flared section 1434. In the enlargement 1436, various axes are shown, and lengths between the axes are indicative of various lengths of portions of the forward side fairing 134. In particular, the enlargement 1436 depicts a first vertical axis 1440, a second vertical axis 1442, a third vertical axis 1444, and a fourth vertical axis 1446. The first vertical axis 1440, the second vertical axis 1442, the third vertical axis 1444, and the fourth vertical axis 1446 are parallel with respect to each other. The enlargement 1436 additionally depicts a horizontal axis 1448 extending in the longitudinal direction.

The third vertical axis 1444 intersects an upper rearward corner 1450 of the rearward arcuate edge 1416, and the fourth vertical axis 1446 intersects a lower rearward corner 1452 of the rearward arcuate edge 1416. The rearward arcuate edge 1416 terminates at each of the upper rearward corner 1450 and the lower rearward corner 1452. The lower rearward corner 1452 and the upper rearward corner 1450 are spaced apart from each other in the longitudinal direction by a length 1454, where the length 1454 is depicted extending from the fourth vertical axis 1446 to the third vertical axis 1444.

The flared section 1434 is depicted having a length 1456 in the longitudinal direction and a length 1458 in the outward direction (e.g., the transverse or lateral direction, perpendicular to the longitudinal direction). The length 1458 is depicted extending in the outward direction from the first vertical axis 1440, and the length 1456 is depicted extending in the longitudinal direction from the second vertical axis 1442. The flared section 1434 curves from the location at which the first vertical axis 1440 intersects the forward side fairing 134 at the recessed surface 1418 to the location at which the second vertical axis 1442 intersects the forward side fairing 134 at the rearward arcuate edge 1416. The flared section 1434 terminates at the rearward arcuate edge 1416. The curvature of the flared section 1434 is further depicted in the sectional view of FIG. 21. As depicted in the figures, the flared section 1434 curves in the outward direction and additionally curves in the longitudinal direction from the recessed surface 1418 to the rearward arcuate edge 1416. In some implementations, an angle of curvature of the flared section 1434 from the recessed surface 1418 is twenty-four degrees or more.

The rearward side fairing 138 and the forward side fairing 134 may be arranged such that the rearward arcuate edge 1416 of the forward side fairing 134 faces the forward arcuate edge 314 of the rearward side fairing 138 and the center 344 of the rearward side fairing 138 is aligned horizontally (e.g., in the outward direction) and vertically (e.g., in the vertical direction) to a center 1460 of the forward side fairing 134. In this arrangement, the first protruding portion 326 of the rearward side fairing 138, the second protruding portion 328 of the rearward side fairing 138, and the flared section 1434 of the forward side fairing 134 each extend outboard of the forward arcuate edge 314 of the rearward side fairing 138 (e.g., more outward than the forward arcuate edge 314). While in this arrangement, the rearward arcuate edge 1416 forming the flared section 1434 extends more outward (e.g., by a greater length in the outward direction) than the forward arcuate edge 314 of the rearward side fairing 138. The rearward arcuate edge 1416 of the forward side fairing 134 has a curvature opposite to a curvature of the forward arcuate edge 314 of the rearward side fairing 138. By way of example, the rearward arcuate edge 1416 curves in the longitudinal direction with a radius of curvature approximately equal to a radius of curvature of the second tire 130, and the forward arcuate edge 314 curves in the longitudinal direction in an opposite manner with a radius of curvature approximately equal to the radius of curvature 312 of the third tire 132.

The flared section 1434 of the forward side fairing 134 increases aerodynamic performance of the forward side fairing 134 and the vehicle 102 by directing air flow away from the tires of the vehicle (e.g., the second tire 130) and other components at the bottom 112 of the vehicle such as trailer bogies, landing gear, wheels, axles, etc. Further, the forward side fairing 134 may be arranged such that air flowing across the flared section 1434 is directed in an efficient manner toward the depression 324 of the rearward side fairing 138. Thus, air flowing from the flared section 1434 may flow across the depression 324, with the depression 324 reducing a turbulence of the air flow at the rearward side fairing 138 and thereby reducing drag at the rearward side fairing 138 and portions of the vehicle 102 proximate to the rearward side fairing 138. For example, the rearward side fairing 138 may reduce air flow wake at locations rearward of the rearward side fairing 138, and the forward side fairing 134 may guide air flow occurring forward of the rearward side fairing 138 in a manner that compliments the reduction of the wake rearward of the rearward side fairing 138. As a result, drag on the vehicle 102 may be reduced.

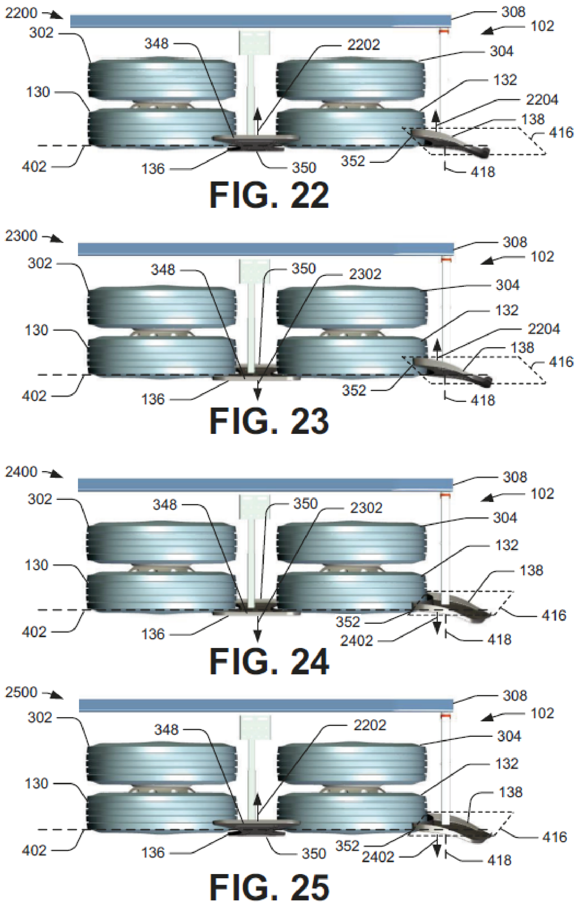

Referring to FIGS. 22-29, partial top views of the vehicle 102 are depicted showing the central side fairing 136 and the rearward side fairing 138 coupled to the vehicle 102 in different configurations. In particular, FIGS. 22-25 depict the central side fairing 136 and the rearward side fairing 138 rotated around the axis 402 (which is parallel to the vehicle longitudinal axis 206 shown by FIG. 2) in various directions and mounted to the vehicle 102 in the rotated orientation. The central side fairing 136 and the rearward side fairing 138 in the examples of FIGS. 22-25 are rotated relative to the orientations shown by FIGS. 4-5.

FIG. 22 depicts an example 2200 showing the central side fairing 136 rotated around the axis 402 such that the top of the central side fairing 136 is rotated toward the frame 308 of the vehicle 102 as indicated by arrow 2202 while the bottom of the central side fairing 136 is rotated away from the frame 308. In the example 2200, the rearward side fairing 138 is rotated in a similar manner, with the top of the rearward side fairing 138 rotated toward the frame 308 as indicated by arrow 2204 and the bottom of the rearward side fairing 138 rotated away from the frame 308.

FIG. 23 depicts an example 2300 showing the rearward side fairing 138 in the orientation depicted by FIG. 22 and described above. However, in the example 2300, the central side fairing 136 is rotated in the opposite direction relative to the rotation depicted by FIG. 22. In particular, the central side fairing 136 is shown rotated around the axis 402 such that the top of the central side fairing 136 is rotated away from the frame 308 of the vehicle 102 as indicated by arrow 2302.

FIG. 24 depicts an example 2400 showing the central side fairing 136 in the orientation depicted by FIG. 23 and described above. However, in the example 2400, the rearward side fairing 138 is rotated in the opposite direction relative to the rotation depicted by FIGS. 22-23. In particular, the rearward side fairing 138 is shown rotated around the axis 402 such that the top of the rearward side fairing 138 is rotated away from the frame 308 of the vehicle 102 as indicated by arrow 2402.

FIG. 25 depicts an example 2500 showing the rearward side fairing 138 in the orientation depicted by FIG. 24 and described above. In this example, the central side fairing 136 is in the orientation depicted by FIG. 22 and described above. In the examples shown by FIGS. 22-25, the rotation of the central side fairing 136 and the rearward side fairing 138 may be within a range of five to ten degrees around the axis 402 relative to the orientations depicted by FIGS. 4-5. For example, in the orientations depicted by FIG. 23, the central side fairing 136 may be rotated by five degrees in the direction indicated by arrow 2302 relative to the orientation of the central side fairing 136 shown by FIGS. 4-5, and the rearward side fairing 138 may be rotated by five degrees in the direction indicated by arrow 2204 relative to the orientation of the rearward side fairing 138 shown by FIGS. 4-5. In some implementations, the central side fairing 136 and the rearward side fairing 138 may be rotated by different amounts. For example, the central side fairing 136 may be rotated by five degrees and the rearward side fairing 138 may be rotated by ten degrees. As another example, the central side fairing 136 may be rotated by ten degrees and the rearward side fairing 138 may be rotated by five degrees. These examples are non-limiting, and other amounts of rotation are possible.

In the configurations shown by FIGS. 22-25, the top 348 of the central side fairing 136 is spaced apart from the frame 308 of the vehicle 102 by a first amount in the lateral direction of the vehicle 102 and the bottom 350 of the central side fairing 136 is spaced apart from the frame 308 by a second amount in the lateral direction. In FIGS. 22 and 25, the first amount is less than the second amount. As a result, the top 348 of the central side fairing 136 is arranged inboard of the outer wall 144 of the third tire 132 of the vehicle 102 in the lateral direction, and the bottom 350 of the central side fairing 136 is arranged outboard of the outer wall 144 of the third tire 132 in the lateral direction.

In FIGS. 23 and 24, the amount of spacing of the top 348 of the central side fairing 136 from the frame 308 is greater than the amount of spacing of the bottom 350 of the central side fairing 136 from the frame 308. As a result, the bottom 350 of the central side fairing 136 is arranged inboard of the outer wall of the tire in the lateral direction, and the top 348 of the central side fairing 136 is arranged outboard of the outer wall 144 of the third tire 132 in the lateral direction.

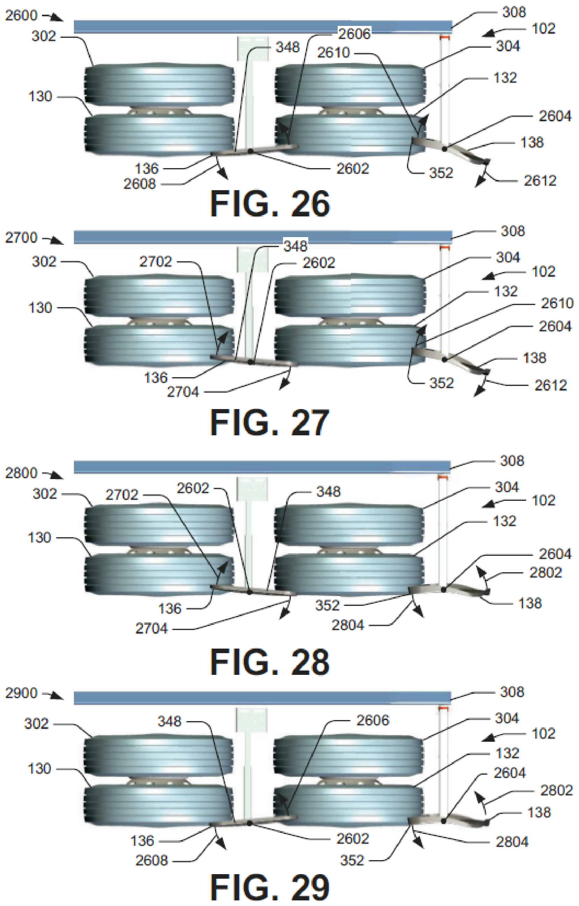

FIGS. 26-29 depict the central side fairing 136 rotated around a vertical axis 2602 and the rearward side fairing 138 rotated around a vertical axis 2604 in various directions and mounted to the vehicle 102 in the rotated orientation. The vertical axis 2602 and the vertical axis 2604 are parallel with the vertical axis 208 shown by FIG. 2 and described above. The central side fairing 136 and the rearward side fairing 138 in the examples of FIGS. 26-29 are rotated relative to the orientations shown by FIGS. 4-5.

FIG. 26 depicts an example 2600 showing the central side fairing 136 rotated around the vertical axis 2602 such that the rearward arcuate edge 340 of the central side fairing 136 is rotated toward the frame 308 of the vehicle 102 as indicated by arrow 2606 while the forward arcuate edge 338 of the central side fairing 136 is rotated away from the frame 308 as indicated by arrow 2608. In the example 2600, the rearward side fairing 138 is rotated around the vertical axis 2604 such that the forward arcuate edge 314 of the rearward side fairing 138 is rotated toward the frame 308 of the vehicle 102 as indicated by arrow 2610 while the rearward edge 322 of the rearward side fairing 138 is rotated away from the frame 308 as indicated by arrow 2612.

FIG. 27 depicts an example 2700 showing the rearward side fairing 138 in the orientation depicted by FIG. 26 and described above. However, in the example 2700, the central side fairing 136 is rotated in the opposite direction relative to the rotation depicted by FIG. 26. In particular, the central side fairing 136 is rotated around the vertical axis 2602 such that the rearward arcuate edge 340 of the central side fairing 136 is rotated away from the frame 308 of the vehicle 102 as indicated by arrow 2704 while the forward arcuate edge 338 of the central side fairing 136 is rotated toward the frame 308 as indicated by arrow 2702.

FIG. 28 depicts an example 2800 showing the central side fairing 136 in the orientation depicted by FIG. 27 and described above. However, in the example 2800, the rearward side fairing 138 is rotated in the opposite direction relative to the rotation depicted by FIGS. 26-27. In particular, the rearward side fairing 138 is shown rotated around the vertical axis 2604 such that the forward arcuate edge 314 of the rearward side fairing 138 is rotated away from the frame 308 of the vehicle 102 as indicated by arrow 2804 while the rearward edge 322 of the rearward side fairing 138 is rotated toward the frame 308 as indicated by arrow 2802.

FIG. 29 depicts an example 2900 showing the rearward side fairing 138 in the orientation depicted by FIG. 28 and described above. In this example, the central side fairing 136 is in the orientation depicted by FIG. 26 and described above. In the examples shown by FIGS. 26-29, the rotation of the central side fairing 136 and the rearward side fairing 138 may be within a range of five to ten degrees around the vertical axis 2602 and the vertical axis 2604, respectively, relative to the orientations depicted by FIGS. 4-5. For example, in the orientations depicted by FIG. 26, the central side fairing 136 may be rotated by five degrees relative to the orientation of the central side fairing 136 shown by FIGS. 4-5, and the rearward side fairing 138 may be rotated by five degrees relative to the orientation of the rearward side fairing 138 shown by FIGS. 4-5. In some implementations, the central side fairing 136 and the rearward side fairing 138 may be rotated by different amounts. For example, the central side fairing 136 may be rotated by five degrees and the rearward side fairing 138 may be rotated by ten degrees. As another example, the central side fairing 136 may be rotated by ten degrees and the rearward side fairing 138 may be rotated by five degrees. These examples are non-limiting, and other amounts of rotation are possible.

Further, in some implementations, the central side fairing 136 may be mounted to the vehicle 102 in the orientation shown by FIGS. 4-5, while the rearward side fairing 138 may be mounted to the vehicle 102 in any of the orientations of the rearward side fairing 138 described above with reference FIGS. 22-29. In some implementations, the rearward side fairing 138 may be mounted to the vehicle 102 in the orientation shown by FIGS. 4-5, while the central side fairing 136 may be mounted to the vehicle 102 in any of the orientations of the central side fairing 136 described above with reference to FIGS. 22-29.

In some implementations, the central side fairing 136 and/or the rearward side fairing 138 may be rotated as described above with reference to FIGS. 22-25 in addition to being rotated as described above with reference to FIGS. 26-29. For example, the central side fairing 136 may be mounted to the vehicle 102 in an orientation in which the central side fairing 136 is rotated around the axis 402 in the direction indicated by arrow 2202 depicted by FIG. 22 or the direction indicated by arrow 2302 depicted by FIG. 23, while also rotated around the vertical axis 2602 as indicated by arrow 2606 and arrow 2608 depicted in FIG. 26 or as indicated by arrow 2702 and arrow 2704 in FIG. 27. The rearward side fairing 138 may be mounted to the vehicle 102 in an orientation in which the rearward side fairing 138 is rotated around the axis 402 in the direction indicated by arrow 2204 depicted by FIG. 22 or the direction indicated by arrow 2402 depicted by FIG. 24, while also rotated around the vertical axis 2604 as indicated by arrow 2610 and arrow 2612 depicted in FIG. 26 or as indicated by arrow 2802 and arrow 2804 in FIG. 28. The amounts of rotation in the various directions may be five degrees, ten degrees, or different amounts as described above and are not limited to the particular amounts depicted by the figures.

In the configurations shown by FIGS. 26-29, the rearward arcuate edge 340 of the central side fairing 136 is spaced apart from the frame 308 of the vehicle by a first spacing in the lateral direction of the vehicle 102 and the forward arcuate edge 338 of the central side fairing 136 is spaced apart from the frame 308 by a second spacing in the lateral direction. In the configurations shown by FIGS. 26 and 29, the first spacing is less than the second spacing. As a result, the rearward arcuate edge 340 of the central side fairing 136 is arranged inboard of the outer wall 144 of the third tire 132 of the vehicle 102 in the lateral direction, and the forward arcuate edge 338 of the central side fairing 136 is arranged outboard of the outer wall 144 of the third tire 132 of the vehicle 102 in the lateral direction.
In the configurations shown by FIGS. 27 and 28, the spacing between the rearward arcuate edge 340 and the frame 308 is greater than the spacing between the forward arcuate edge 338 and the frame 308. As a result, the forward arcuate edge 338 of the central side fairing 136 is arranged inboard of the outer wall of the tire of the vehicle 102 in the lateral direction, and the rearward arcuate edge 340 of the central side fairing 136 is arranged outboard of the outer wall 144 of the third tire 132 of the vehicle 102 in the lateral direction.

In the configurations shown by FIGS. 22-29, an entirety of the forward arcuate edge 314 of the rearward side fairing 138 is aligned to the plane 416, with the plane 416 intersected by the lateral axis 418 of the vehicle 102 in directions substantially non-normal to the plane 416. The plane 416 is fixed to the location of the forward arcuate edge 314 such that the rotated orientations of the rearward side fairing 138 shown throughout the views in FIGS. 22-29 are associated with similar rotation of the plane 416 in the views.

In the configurations depicted by FIGS. 22 and 23, the upper corner 352 of the forward arcuate edge 314 of the rearward side fairing 138 is angled toward the frame 308 of the vehicle 102, and the lower corner 354 of the forward arcuate edge 314 of the rearward side fairing 138 is angled away from the frame 308 of the vehicle 102. In the configurations depicted by FIGS. 24 and 25, the upper corner 352 of the forward arcuate edge 314 of the rearward side fairing 138 is angled away from the frame 308 of the vehicle 102 and the lower corner 354 of the forward arcuate edge 314 of the rearward side fairing 138 is angled toward the frame 308 of the vehicle 102.

In the configurations shown by FIGS. 26 and 27, the upper corner 352 of the forward arcuate edge 314 of the rearward side fairing 138 and the lower corner 354 of the forward arcuate edge 314 of the rearward side fairing 138 are angled toward the frame 308 of the vehicle 102, and the rearward arcuate edge 340 of the rearward side fairing 138 is angled away from the frame 308. In the configurations shown by FIGS. 28 and 29, the upper corner 352 of the forward arcuate edge 314 of the rearward side fairing 138 and the lower corner 354 of the forward arcuate edge 314 of the rearward side fairing 138 are angled away from the frame 308 of the vehicle 102, and the rearward arcuate edge 340 of the rearward side fairing 138 is angled toward the frame 308. Thus, various configurations of the fairings are possible, and the fairing 136 and the rearward side fairing 138 can be arranged at different positions inboard or outboard to the tires of the vehicle 102 and in relation to each other.

The fairing configurations described herein increase aerodynamic performances of vehicles and reduce drag, which can reduce vehicle fuel consumption and reduce engine load. The tires of the vehicle 102 are shielded from air flow by the side fairings (e.g., the forward side fairing 134, the central side fairing 136, and the rearward side fairing 138) and experience reduced drag as a result. Additionally, air flow separation at the sides of the vehicle 102 (e.g., the first side 202 and the second side 204) is reduced, which results in less air flow coming into contact with components at the bottom 112 of the vehicle 102 such as trailer bogies, landing gear, axles, etc., and less turbulence of air at the sides of the vehicle 102.

In one or more implementations, a fairing for a vehicle includes: a forward arcuate edge; a rearward edge; an outward surface bounded by the forward arcuate edge and the rearward edge, the rearward edge opposite to the forward arcuate edge across a center of the outward surface and offset relative to the forward arcuate edge in a normal direction of the outward surface at the forward arcuate edge, the outward surface curving from the forward arcuate edge to the rearward edge in the normal direction; and a depression of the outward surface extending opposite to the normal direction, the depression formed at least in part by the rearward edge. In a first example of the fairing, the depression is centered relative to the rearward edge. A second example of the fairing optionally includes the first example, and further includes wherein the depression is offset relative to the forward arcuate edge in the normal direction. A third example of the fairing optionally includes one or both of the first and second examples, and further includes wherein the outward surface curves concavely from the forward arcuate edge across the depression to the rearward edge. A fourth example of the fairing optionally includes one or more or each of the first through third examples, and further includes wherein the outward surface forms a first protruding portion and a second protruding portion spaced apart from each other by the depression. A fifth example of the fairing optionally includes one or more or each of the first through fourth examples, and further includes wherein each of the first protruding portion and the second protruding portion is formed at least in part by the rearward edge. A sixth example of the fairing optionally includes one or more or each of the first through fifth examples, and further includes wherein the first protruding portion and the second protruding portion extend in the normal direction by a same amount. A seventh example of the fairing optionally includes one or more or each of the first through sixth examples, and further includes wherein the depression is offset from the forward arcuate edge in the normal direction by a first length and each of the first protruding portion and the second protruding portion is offset from the forward arcuate edge in the normal direction by a second length, the second length greater than the first length. An eighth example of the fairing optionally includes one or more or each of the first through seventh examples, and further includes wherein a length of the depression in a direction from the first protruding portion to the second protruding portion is between twenty percent and twenty-five percent of a length of the forward arcuate edge in the direction. A ninth example of the fairing optionally includes one or more or each of the first through eighth examples, and further includes wherein a length between a peak of the first protruding portion and a peak of the second protruding portion is between seventy percent and eighty percent of a length of the forward arcuate edge. A tenth example of the fairing optionally includes one or more or each of the first through ninth examples, and further includes wherein the first protruding portion and the second protruding portion each curve to a sidewall of the fairing.

In one or more implementations, a fairing assembly includes: a first fairing including a rearward arcuate edge; and a second fairing including an outward surface curving from a forward arcuate edge of the second fairing to a rearward edge of the second fairing, the rearward edge forming a first protruding portion, a second protruding portion, and a depression centered between the first protruding portion and the second protruding portion. In a first example of the fairing assembly, while the rearward arcuate edge of the first fairing faces the forward arcuate edge of the second fairing and a center of the first fairing is aligned horizontally and vertically to a center of the second fairing, the first protruding portion and the second protruding portion extend outboard of an outward surface of the first fairing. A second example of the fairing assembly optionally includes the first example, and further includes wherein the first fairing is configured to mount to a vehicle adjacent to a tire at a side of the vehicle, and the second fairing is configured to mount to the vehicle adjacent to the tire and opposite to the first fairing across the tire. A third example of the fairing assembly optionally includes one or both of the first and second examples, and further includes a third fairing including a flared section, the flared section curving from a recessed surface of the third fairing to a rearward arcuate edge of the third fairing and terminating at the rearward arcuate edge, with an angle of the flared section relative to the recessed surface being at least twenty-four degrees.

In one or more implementations, a fairing assembly includes: a rearward side fairing including an outward surface curving from a forward arcuate edge of the rearward side fairing to a rearward edge of the rearward side fairing, the rearward edge forming a first protruding portion, a second protruding portion, and a depression centered between the first protruding portion and the second protruding portion; and a forward side fairing including a flared section, the flared section curving from a recessed surface of the forward side fairing to a rearward arcuate edge of the forward side fairing and terminating at the rearward arcuate edge. In a first example of the fairing assembly, while the rearward arcuate edge of the forward side fairing faces the forward arcuate edge of the rearward side fairing and a center of the rearward side fairing is aligned horizontally and vertically to a center of the forward side fairing, the first protruding portion, the second protruding portion, and the flared section each extend outboard of the forward arcuate edge of the rearward side fairing. A second example of the fairing assembly optionally includes the first example, and further includes wherein the rearward arcuate edge of the forward side fairing and the forward arcuate edge of the rearward side fairing have opposite curvatures. A third example of the fairing assembly optionally includes one or both of the first and second examples, and further includes wherein the forward side fairing is configured to mount to a vehicle adjacent to a first tire at a side of the vehicle, and the rearward side fairing is configured to mount to the vehicle adjacent to a second tire at the side of the vehicle and rearward of the forward side fairing in a longitudinal direction of the vehicle. A fourth example of the fairing assembly optionally includes one or more or each of the first through third examples, and further includes a central side fairing configured to mount to the vehicle between the forward side fairing and the rearward side fairing and adjacent to each of the first tire and the second tire.

In one or more implementations, a fairing assembly comprises: a rearward side fairing including an outward surface curving from a forward arcuate edge of the rearward side fairing to a rearward edge of the rearward side fairing, the rearward edge forming a first protruding portion, a second protruding portion, and a depression centered between the first protruding portion and the second protruding portion; and a central side fairing including a rearward arcuate edge shaped to face the rearward side fairing while the central side fairing and the rearward side fairing are mounted to a vehicle including a frame, the central side fairing and the rearward side fairing each offset from the frame in a lateral direction of the vehicle. In a first example of the fairing assembly, while the central side fairing is mounted to the vehicle, a top of the central side fairing and a bottom of the central side fairing are substantially equally spaced apart from the frame of the vehicle in the lateral direction of the vehicle. A second example of the fairing assembly optionally includes the first example, and further includes wherein while the central side fairing is mounted to the vehicle, the rearward arcuate edge of the central side fairing and a forward arcuate edge of the central side fairing are substantially equally spaced apart from the frame of the vehicle in the lateral direction of the vehicle. A third example of the fairing assembly optionally includes one or both of the first and second examples, and further includes wherein while the central side fairing is mounted to the vehicle, a top of the central side fairing is spaced apart from the frame of the vehicle by a first amount in the lateral direction of the vehicle and a bottom of the central side fairing is spaced apart from the frame by a second amount in the lateral direction. A fourth example of the fairing assembly optionally includes one or more or each of the first through third examples, and further includes wherein the first amount is less than the second amount. A fifth example of the fairing assembly optionally includes one or more or each of the first through fourth examples, and further includes wherein the top of the central side fairing is arranged inboard of an outer wall of a tire of the vehicle in the lateral direction. A sixth example of the fairing assembly optionally includes one or more or each of the first through fifth examples, and further includes wherein the bottom of the central side fairing is arranged outboard of an outer wall of a tire in the lateral direction. A seventh example of the fairing assembly optionally includes one or more or each of the first through sixth examples, and further includes, wherein the first amount is greater than the second amount. An eighth example of the fairing assembly optionally includes one or more or each of the first through seventh examples, and further includes wherein the bottom of the central side fairing is arranged inboard of an outer wall of a tire of the vehicle in the lateral direction. A ninth example of the fairing assembly optionally includes one or more or each of the first through eighth examples, and further includes wherein the top of the central side fairing is arranged outboard of an outer wall of a tire in the lateral direction. A tenth example of the fairing assembly optionally includes one or more or each of the first through ninth examples, and further includes wherein while the central side fairing is mounted to the vehicle, the rearward arcuate edge of the central side fairing is spaced apart from the frame of the vehicle by a first spacing in the lateral direction of the vehicle and a forward arcuate edge of the central side fairing is spaced apart from the frame by a second spacing in the lateral direction. An eleventh example of the fairing assembly optionally includes one or more or each of the first through tenth examples, and further includes wherein the first spacing is less than the second spacing. A twelfth example of the fairing assembly optionally includes one or more or each of the first through eleventh examples, and further includes wherein the rearward arcuate edge of the central side fairing is arranged inboard of an outer wall of a tire of the vehicle in the lateral direction. A thirteenth example of the fairing assembly optionally includes one or more or each of the first through twelfth examples, and further includes wherein the forward arcuate edge of the central side fairing is arranged outboard of an outer wall of a tire of the vehicle in the lateral direction. A fourteenth example of the fairing assembly optionally includes one or more or each of the first through thirteenth examples, and further includes wherein the first spacing is greater than the second spacing. A fifteenth example of the fairing assembly optionally includes one or more or each of the first through fourteenth examples, and further includes wherein the forward arcuate edge of the central side fairing is arranged inboard of an outer wall of a tire of the vehicle in the lateral direction. A sixteenth example of the fairing assembly optionally includes one or more or each of the first through fifteenth examples, and further includes wherein the rearward arcuate edge of the central side fairing is arranged outboard of an outer wall of a tire of the vehicle in the lateral direction. A seventeenth example of the fairing assembly optionally includes one or more or each of the first through sixteenth examples, and further includes wherein while the rearward side fairing is mounted to the vehicle, an entirety of the forward arcuate edge of the rearward side fairing is aligned with a plane intersected by a lateral axis of the vehicle in a direction substantially normal to the plane. An eighteenth example of the fairing assembly optionally includes one or more or each of the first through seventeenth examples, and further includes wherein while the rearward side fairing is mounted to the vehicle, an entirety of the forward arcuate edge of the rearward side fairing is aligned with a plane intersected by a lateral axis of the vehicle in a direction substantially non-normal to the plane. A nineteenth example of the fairing assembly optionally includes one or more or each of the first through eighteenth examples, and further includes wherein an upper corner of the forward arcuate edge of the rearward side fairing is angled toward the frame of the vehicle and a lower corner of the forward arcuate edge of the rearward side fairing is angled away from the frame of the vehicle. A twentieth example of the fairing assembly optionally includes one or more or each of the first through nineteenth examples, and further includes wherein an upper corner of the forward arcuate edge of the rearward side fairing is angled away from the frame of the vehicle and a lower corner of the forward arcuate edge of the rearward side fairing is angled toward the frame of the vehicle. A twenty-first example of the fairing assembly optionally includes one or more or each of the first through twentieth examples, and further includes wherein an upper corner of the forward arcuate edge of the rearward side fairing and a lower corner of the forward arcuate edge of the rearward side fairing are angled toward the frame of the vehicle, and the rearward arcuate edge of the rearward side fairing is angled away from the frame. A twenty-second example of the fairing assembly optionally includes one or more or each of the first through twenty-first examples, and further includes wherein an upper corner of the forward arcuate edge of the rearward side fairing and a lower corner of the forward arcuate edge of the rearward side fairing are angled away from the frame of the vehicle, and the rearward arcuate edge of the rearward side fairing is angled toward the frame.

Although the systems, fairings, assemblies, and techniques have been described in language specific to structural features and/or methodological acts, it is to be understood that the systems, fairings, assemblies, and techniques defined in the appended claims are not necessarily limited to the specific features or acts described. Rather, the specific features and acts are disclosed as example forms of implementing the claimed subject matter.

It will be appreciated that the configurations disclosed herein are illustrative in nature, and that these specific implementations are not to be considered in a limiting sense because numerous variations are possible. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Moreover, the terms "first," "second," and "third," etc. are used merely as labels and are not intended to impose numerical requirements or a particular positional order on their objects. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A fairing for a vehicle, comprising:
a forward arcuate edge;
a rearward edge;
an outward surface bounded by the forward arcuate edge and the rearward edge, the rearward edge opposite to the forward arcuate edge across a center of the outward surface and offset relative to the forward arcuate edge in a normal direction of the outward surface at the forward arcuate edge, the outward surface curving from the forward arcuate edge to the rearward edge in the normal direction; and
a depression of the outward surface extending opposite to the normal direction, the depression formed at least in part by the rearward edge.

2. The fairing of claim 1, wherein the depression is centered relative to the rearward edge.

3. The fairing of claim 1, wherein the depression is offset relative to the forward arcuate edge in the normal direction.

4. The fairing of claim 1, wherein the outward surface curves concavely from the forward arcuate edge across the depression to the rearward edge.

5. The fairing of claim 1, wherein the outward surface forms a first protruding portion and a second protruding portion spaced apart from each other by the depression.

6. The fairing of claim 4, wherein each of the first protruding portion and the second protruding portion is formed at least in part by the rearward edge.

7. The fairing of claim 4, wherein the first protruding portion and the second protruding portion extend in the normal direction by a same amount.

8. The fairing of claim 4, wherein the depression is offset from the forward arcuate edge in the normal direction by a first length, and each of the first protruding portion and the second protruding portion is offset from the forward arcuate edge in the normal direction by a second length, the second length greater than the first length.

9. The fairing of claim 4, wherein a length of the depression in a direction from the first protruding portion to the second protruding portion is between twenty percent and twenty-five percent of a length of the forward arcuate edge in the direction.

10. The fairing of claim 4, wherein a length between a peak of the first protruding portion and a peak of the second protruding portion is between seventy percent and eighty percent of a length of the forward arcuate edge.

11. The fairing of claim 4, wherein the first protruding portion and the second protruding portion each curve to a sidewall of the fairing.

12. A fairing assembly, comprising:
a first fairing including a rearward arcuate edge; and
a second fairing including an outward surface curving from a forward arcuate edge of the second fairing to a rearward edge of the second fairing, the rearward edge forming a first protruding portion, a second protruding portion, and a depression centered between the first protruding portion and the second protruding portion.

13. The fairing assembly of claim 11, wherein, while the rearward arcuate edge of the first fairing faces the forward arcuate edge of the second fairing and a center of the first fairing is aligned horizontally and vertically to a center of the second fairing, the first protruding portion and the second protruding portion extend outboard of an outward surface of the first fairing.

14. The fairing assembly of claim 11, wherein the first fairing is configured to mount to a vehicle adjacent to a tire at a side of the vehicle, and the second fairing is configured to mount to the vehicle adjacent to the tire and opposite to the first fairing across the tire.

15. A fairing assembly, comprising:
a rearward side fairing including an outward surface curving from a forward arcuate edge of the rearward side fairing to a rearward edge of the rearward side fairing, the rearward edge forming a first protruding portion, a second protruding portion, and a depression centered between the first protruding portion and the second protruding portion; and
a central side fairing including a rearward arcuate edge shaped to face the rearward side fairing while the central side fairing and the rearward side fairing are mounted to a vehicle including a frame, the central side fairing and the rearward side fairing each offset from the frame in a lateral direction of the vehicle.

16. The fairing assembly of claim 15, wherein while the central side fairing is mounted to the vehicle, a top of the central side fairing and a bottom of the central side fairing are substantially equally spaced apart from the frame of the vehicle in the lateral direction of the vehicle.

17. The fairing assembly of claim 15, wherein while the central side fairing is mounted to the vehicle, a top of the central side fairing is spaced apart from the frame of the vehicle by a first amount in the lateral direction of the vehicle and a bottom of the central side fairing is spaced apart from the frame by a second amount in the lateral direction.

18. The fairing assembly of claim 17, wherein the first amount is less than the second amount.

19. The fairing assembly of claim 18, wherein while the central side fairing is mounted to the vehicle, the rearward arcuate edge of the central side fairing is spaced apart from the frame of the vehicle by a first spacing in the lateral direction of the vehicle and a forward arcuate edge of the central side fairing is spaced apart from the frame by a second spacing in the lateral direction.

20. The fairing assembly of claim 19, wherein the first spacing is less than the second spacing.
